# EUROPÄISCHE PATENTANMELDUNG

(11) **EP 3 901 607 A1**
(43) Veröffentlichungstag der Anmeldung: **27.10.2021**
(21) Anmeldenummer: 20171156.1
(22) Anmeldetag: 23.04.2020
(51) Int. Cl.: G01N 1/36

(54) **GEWEBEBLOCK MIT MEHREREN GEWEBEPROBEN SOWIE VERFAHREN UND VORRICHTUNG ZUM HERSTELLEN EINES MEHRERE GEWEBEPROBEN ENTHALTENDEN GEWEBEBLOCKS**

(71) Anmelder: Märsch, Thomas, 80939 München (DE)
(72) Erfinder: Märsch, Thomas, 80939 München (DE)
(74) Vertreter: Keilitz, Wolfgang

(57) **Zusammenfassung**

Die Erfindung betrifft ein Verfahren und eine Vorrichtung zum Herstellen eines mehrere Gewebeproben (2) enthaltenden Gewebeblocks (4), insbesondere eines Gewebe-Wachsblocks, mit folgenden Schritten:
- Bereitstellen einer Ausgießform (8) mit mehreren Fächern (10), die durch eine oder mehrere Zwischenwände (9) voneinander abgegrenzt sind;
- Einlegen jeweils einer Gewebeprobe (2) in die einzelnen Fächer (10);
- Anordnen eines Hilfsträgers (15) auf der Ausgießform (8);
- Füllen der Ausgießform (8) mit einem ersten Ausgießmaterial (16a);
- Entformen des Gewebeblocks (4) aus der Ausgießform (8), wobei der Gewebeblock (4) einen oder mehrere Freiräume (20) aufweist, der bzw. die durch die wenigstens eine Zwischenwand (9) als Abdruck derselben entstanden ist bzw. sind; und
- Füllen des wenigstens einen Freiraums (20) mit einem zweiten Ausgießmaterial (16b).

## Beschreibung

Die Erfindung betrifft ein Verfahren zum Herstellen eines mehrere Gewebeproben enthaltenden Gewebeblocks, insbesondere eines Gewebe-Wachsblocks, einen Gewebeblock mit mehreren Gewebeproben, sowie eine Anordnung zum Herstellen eines mehrere Gewebeproben enthaltenden Gewebeblocks.

### HINTERGRUND DER ERFINDUNG

Bei Verdacht auf bestimmte Gewebe- oder Zellerkrankungen wird dem Patienten üblicherweise mittels einer Biopsie eine Gewebeprobe entnommen. Für die spätere mikroskopische Untersuchung wird die Gewebeprobe chemisch vorbehandelt (entwässert), dann in einen Wachsblock eingebettet und danach mittels eines Mikrotoms in dünne Scheiben geschnitten. Die einzelnen Scheiben der Gewebeprobe werden dann auf Objektträger (Glasplättchen) aufgezogen und können optional farblich markiert werden, um bestimmte Zelltypen sichtbar zu machen. Die Scheiben werden schließlich mit Hilfe eines Mikroskops auf mögliche Anomalien bzw. Erkrankungen untersucht. Ebenso kann aus dem Wachsblock auch Probenmaterial für weitere Untersuchungen, wie z. B. PCR, Sequenzierung, Maldi-TOF, etc. entnommen werden.

Die vorstehend genannte Biopsie wird in der Regel in einer Arztpraxis oder in einem Krankenhaus durchgeführt. Nach der Entnahme wird die Gewebeprobe in ein Probengefäß gegeben, in dem sich eine Fixierlösung befindet. Das Probengefäß wird dann in ein Labor zur weiteren Verarbeitung geschickt. Im Labor wird die Gewebeprobe aus dem Probengefäß entnommen, in eine Kassette, wie z. B. eine sogenannte Paraform®-Kassette, eingelegt und dann in einen Entwässerungsautomaten (z. B. der Firmen Sakura, Leica, Milestone, etc.) gegeben. Der Entwässerungsautomat umfasst mehrere Bäder mit verschiedenen Chemikalien zur Entwässerung und Aufbereitung der Gewebeprobe. Danach wird die Kassette mit der Gewebeprobe in eine Ausgießform gelegt und mit heißem, flüssigen Wachs ausgegossen. Dieser Schritt des Ausgießens oder "Blockens" kann entweder manuell erfolgen oder in einem hierfür vorgesehen Gerät z.B. der Firma Sakura durchgeführt werden. Der nach dem Abkühlen entstandene Gewebe-Wachsblock wird dann mit einem Mikrotom in dünne Scheiben geschnitten, die danach mikroskopisch untersucht werden.

In der Regel wird einem Patienten bei einem Biopsie-Termin nur eine einzige Gewebeprobe entnommen. In einigen Fällen ist es aber erforderlich, dem Patienten mehrere Gewebeproben an unterschiedlichen Stellen des Körpers, wie z. B. an verschiedenen Orten des Magen-Darm-Traktes zu entnehmen. Bei der anschließenden Weiterverarbeitung der Proben kommt es immer wieder zu Fehlern, indem z. B. die Proben vertauscht oder falsch zugeordnet werden und somit die Proben nicht mehr mit ihrem jeweiligen Entnahmeort übereinstimmen.

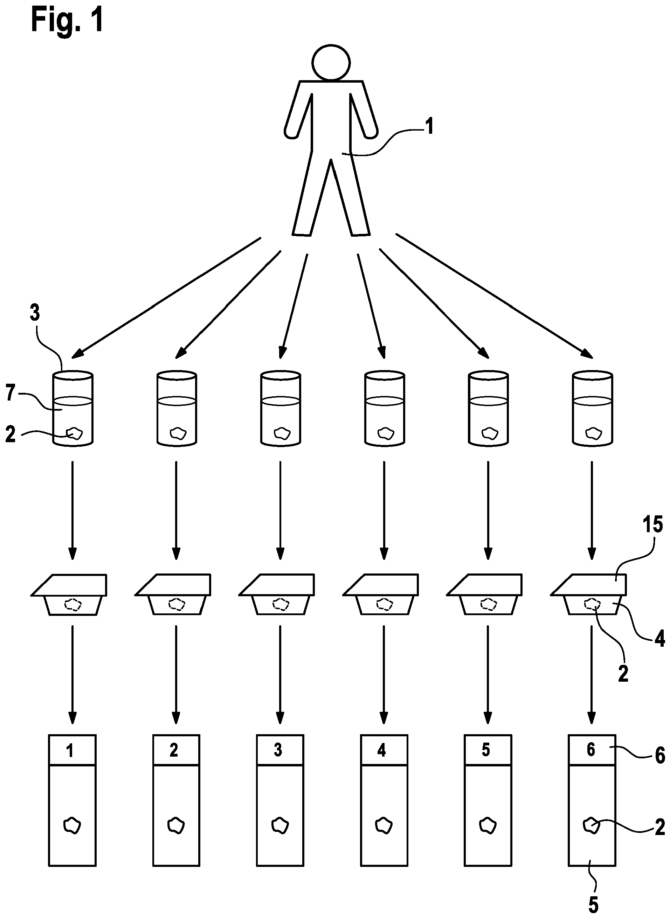

Fig. 1 veranschaulicht ein Verfahren zur Verarbeitung und Diagnose von Biopsieproben, wie es im Stand der Technik heute durchgeführt wird. Dabei werden einem Patienten 1 zunächst mehrere - im dargestellten Fall sechs - Gewebeproben 2 an unterschiedlichen Stellen des Körpers entnommen. Die Proben 2 werden dann jeweils einzeln in Probengefäße 3 gelegt, die mit einer Fixierlösung 7, meist Formalin, befüllt sind. Die Probengefäße 3 werden danach zur weiteren Verarbeitung an ein Labor geschickt. Dort werden die Proben 2 nach einem Entwässerungsprozess jeweils in einen Wachsblock 4 gegossen, an dem ein Hilfsträger 15 befestigt ist, der im Wesentlichen dazu dient, zu einem späteren Zeitpunkt in ein Mikrotom eingespannt zu werden. Bei dem Hilfsträger 15 handelt es sich üblicherweise um ein Teil einer Paraform®-Kassette, die am Gewebe-Wachsblock 4 angegossen ist. Die Kassetten werden einzeln in ein Mikrotom (nicht gezeigt) eingespannt, und die Gewebe-Wachsblöcke 4 in sehr dünne Scheiben geschnitten. Die Scheiben bzw. "Schnitte" werden anschließend auf jeweils einen Objektträger 5 - in der Regel ein Glasplättchen - aufgezogen. Die auf den Objektträgern 5 befindlichen Scheiben können ggf. noch mit bestimmten Chemikalien gefärbt werden, bevor sie schließlich von einem Pathologen mikroskopisch untersucht werden. Dieses Verfahren ist sehr aufwändig und wegen des hohen Material- und Arbeitsaufwandes auch relativ teuer. Darüber hinaus besteht die Gefahr, dass Proben 2 vertauscht oder falsch zugeordnet werden.

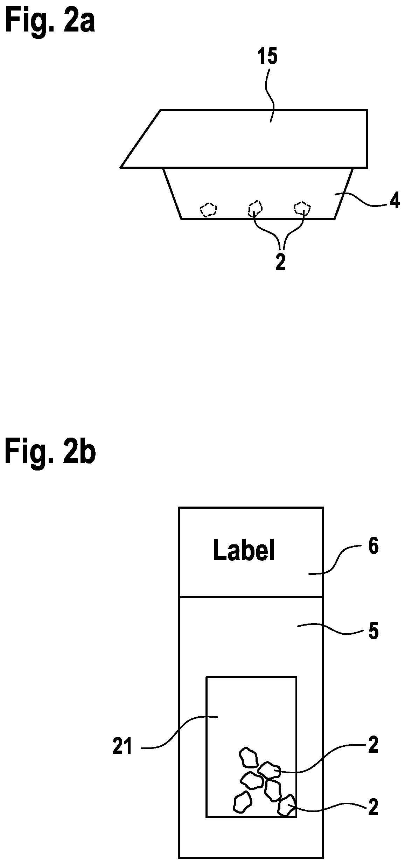

Um das vorstehend beschriebene Verfahren zur Verarbeitung und Diagnose von Biopsieproben zu vereinfachen, wurden bereits Versuche unternommen, mehrere Proben 2 in einen einzigen Gewebe-Wachsblock 4 zu integrieren. Hierzu wurden mehrere Proben 2 in eine Ausgießform gelegt und mit heißem, flüssigen Wachs übergossen. Fig. 2a zeigt eine Seitenansicht eines Gewebe-Wachsblocks 4, der auf diese Weise hergestellt wurde, mit einem daran befestigten Hilfsträger 15 (Kassette). Wie zu erkennen ist, sind im Gewebe-Wachsblock 4 mehrere Proben 2 integriert.

Fig. 2b zeigt einen auf einem Objektträger 5 aufgezogenen Schnitt des Gewebe-Wachsblocks 4 von Fig. 2a. Dort ist zu erkennen, dass die Proben 2 ungeordnet auf dem Objektträger 5 verteilt sind und es somit praktisch unmöglich ist, die einzelnen Proben 2 bestimmten Proben-Entnahmeorten zuzuordnen. Ein solches Verfahren ist daher nicht geeignet, verschiedene Proben 2, die einem Patienten 1 an unterschiedlichen Orten entnommen wurden, zu verarbeiten und zu diagnostizieren. Gleiches gilt auch für Gewebeproben 2, die unterschiedlichen Patienten entnommen wurden und gemeinsam weiterverarbeitet werden sollen.

Aus dem Stand der Technik ist es ferner bekannt, mehrere Gewebeproben zunächst in verschiedene Fächer einer Form zu legen und die gesamte Form dann mit heißem, flüssigen Wachs zu übergießen, um den gewünschten Gewebe-Wachsblock herzustellen. Dies hat jedoch den Nachteil, dass die Form später mitgeschnitten werden muss und sich dadurch die Schneide des Mikrotoms sehr schnell abnützt.

Es ist daher eine Aufgabe der vorliegenden Erfindung, ein alternatives Verfahren zum Herstellen eines mehrere Gewebeproben enthaltenden Gewebeblocks zu schaffen, bei dem der Gewebeblock in einer Ausgießform hergestellt wird, die mit einem heißen, flüssigen Ausgießmaterial ausgegossen wird. Außerdem ist es die Aufgabe der vorliegenden Erfindung, einen mehrere Gewebeproben enthaltenden Gewebeblock zu schaffen. Schließlich soll noch eine spezielle Anordnung zum Herstellen eines mehrere Gewebeproben enthaltenden Gewebeblocks geschaffen werden.

Gelöst werden diese Aufgaben gemäß der Erfindung durch die in den unabhängigen Ansprüchen angegebenen Merkmale. Weitere Ausgestaltungen der Erfindung ergeben sich aus den Unteransprüchen.

Gemäß der Erfindung wird ein Verfahren zum Herstellen eines mehrere Gewebeproben enthaltenden Gewebeblocks, insbesondere eines Gewebe-Wachsblocks vorgeschlagen, das folgende Schritte umfasst:
- Bereitstellen einer Ausgießform mit mehreren Fächern, die durch eine oder mehrere Zwischenwände voneinander abgegrenzt sind;
- Einlegen jeweils einer oder mehrerer Gewebeproben in die einzelnen Fächer;
- Anordnen eines Hilfsträgers auf der Ausgießform;
- Füllen der Ausgießform mit einem ersten Ausgießmaterial in flüssigem Zustand;
- Entformen des Gewebeblocks aus der Ausgießform (nach dem Aushärten bzw. Abkühlen des ersten Ausgießmaterials), wobei der Gewebeblock einen oder mehrere Freiräume aufweist, der bzw. die durch die wenigstens eine Zwischenwand als Abdruck derselben entstanden ist bzw. sind; und
- Füllen des bzw. der so entstandenen Freiräume mit einem zweiten Ausgießmaterial in flüssigem Zustand. Nach dem Auskühlen bzw. Erhärte des zweiten Ausgießmaterials ist dieser fertig und kann geschnitten werden.

Ein solches Verfahren bietet den wesentlichen Vorteil, dass die Gewebeproben in einem vorgegebenen Raster im Gewebeblock angeordnet sind und somit eindeutig einem bestimmten Entnahmeort (wenn die Proben von demselben Patienten stammen) oder ggf. auch einem bestimmten Patienten (wenn die Proben von verschiedenen Patienten stammen) zugeordnet werden können. Der Gewebeblock enthält ferner keinen "Fremdstoff" zwischen den Gewebeproben, der beim nachfolgenden Schneiden des Gewebeblocks mitgeschnitten werden muss.

Die beiden Ausgießmaterialien können prinzipiell aus demselben Material oder aus verschiedenen Materialien bestehen. Gemäß einer bevorzugten Ausführungsform der Erfindung bestehen beide Ausgießmaterialien aus Wachs bzw. Paraffin. Alternativ könnte das erste Ausgießmaterial auch Wachs sein und das zweite Ausgießmaterial aus einem weichen Kunststoff bestehen. Sofern beide Ausgießmaterialien aus Wachs bzw. Paraffin bestehen oder beide Materialien eine mit Wachs vergleichbare Härte aufweisen, kann der Gewebeblock sehr messerschonend geschnitten werden.

Die Verfahrensschritte: "Anordnen des Hilfsträgers auf der Ausgießform" und "Füllen der Ausgießform mit einem ersten Ausgießmaterial in flüssigem Zustand" können auch in umgekehrter Reihenfolge durchgeführt werden. Die Ausgießform wird so weit gefüllt, dass der Hilfsträger in das Ausgießmaterial eintaucht und nach dem Erkalten des Ausgießmaterials am Gewebe-Wachsblock anhaftet.

Der Hilfsträger hat vorzugsweise eine oder mehrere Öffnungen, durch die das Ausgießmaterial in die Ausgießform eingefüllt werden kann. Bei dem Hilfsträger kann es sich beispielsweise um einen Teil einer aus dem Stand der Technik bekannten Standard Biopsie Kassette handeln. Der Hilfsträger besteht vorzugsweise aus Kunststoff und ist im Wesentlichen dazu vorgesehen, in ein Mikrotom eingespannt zu werden, mit dem die Gewebe-Wachsblöcke in dünne Scheiben geschnitten werden.

Die Ausgießform kann z. B. eine wannenförmige Metallform sein, deren Boden durch eine oder mehrere Zwischenwände in Fächer unterteilt ist. Gemäß einer bevorzugten Ausführungsform der Erfindung besteht die Ausgießform aus Silikon oder aus einem anderen flexiblen Kunststoff. Eine Ausgießform aus Silikon hat den Vorteil, dass sie flexibel und glatt ist und der Gewebeblock leicht daraus entnommen werden kann. Sie kann darüber hinaus mehrfach wiederverwendet werden.

Um das Entformen weiter zu erleichtern, kann die Ausgießform optional schräge Wände, insbesondere schräge Seiten- und/oder Zwischenwände, aufweisen, die in Richtung der Fächer schräg abfallen.

Wie vorstehend erwähnt, werden die nach dem ersten Ausgießen und Entformen im halbfertigen Gewebeblock entstandenen Freiräume mit einem zweiten Ausgießmaterial gefüllt. Hierzu gibt es prinzipiell verschiedene Möglichkeiten:
Gemäß einer ersten Option ist ein Rahmen vorgesehen, der auf den halbfertigen Gewebeblock aufgesetzt wird. Das zweite Ausgießmaterial wird dann in den Rahmen hineingegossen und füllt die im Gewebeblock vorhandenen Freiräume.

Gemäß einer zweiten Option kann auch ein Ausgießmaterial-Spender vorgesehen sein, der das zweite Ausgießmaterial in bestimmten Dosen ausgibt. Der Ausgießmaterial-Spender umfasst vorzugsweise eine Ausgabeöffnung, in die der halbfertige Gewebeblock eingesetzt wird. Die Ausgabeöffnung und der Gewebeblock bzw. dessen Hilfsträger sind vorzugsweise so aufeinander angepasst, dass die Ausgabeöffnung vom Gewebeblock oder dem Hilfsträger dicht abgeschlossen werden kann, wenn der Gewebeblock darin eingesetzt ist. In diesem Fall bildet die Ausgabeöffnung quasi den Rahmen für den zweiten Ausgießvorgang.

Der Bereich um die Ausgabeöffnung kann gekühlt und/oder beheizt werden. Durch eine Kühlung der Ausgabeöffnung kann ein schnelles Aushärten des zweiten Ausgießmaterials erreicht werden. Durch Erwärmung kann ein Anhaften des Ausgießmaterials an der Ausgabeöffnung vermieden bzw. daran anhaftendes Material gelöst werden.

Gemäß einer zweiten Variante der Erfindung wird eine spezielle Ausgießform verwendet, mit deren Hilfe zunächst ein halbfertiger Gewebeblock mit einem integrierten Rahmen, der ebenfalls aus dem ersten Ausgießmaterial besteht, erzeugt wird. Der Rahmen ist dabei ein integraler Bestandteil des halbfertigen Gewebeblocks. Der Raum innerhalb des Rahmens wird dann in einem zweiten Ausgießschritt mit dem zweiten Ausgießmaterial gefüllt, um den fertigen Gewebe-Wachsblock zu erzeugen.

Entsprechend wird ein Verfahren zum Herstellen eines mehrere Gewebeproben enthaltenden Gewebeblocks, insbesondere eines Gewebe-Wachsblocks vorgeschlagen, bei dem eine Ausgießform mit mehreren Fächern verwendet wird, die eine um die Fächer außen herum verlaufende, grabenartige Vertiefung aufweist. Durch das Ausgießen der Ausgießform mit dem ersten Ausgießmaterial entsteht ein halbfertiger Gewebeblock, der eine um die Gewebeproben herumlaufende Wand bzw. einen Rahmen aufweist. Der Raum innerhalb der Wand bzw. des Rahmens wird dann in einem zweiten Schritt mit dem zweiten Ausgießmaterial gefüllt.

Gemäß einer speziellen Ausführungsform der Erfindung wird der Gewebeblock nach dem Entformen und vor dem Füllen des bzw. der Freiräume mit dem zweiten Ausgießmaterial auf eine vorgegebene Temperatur, z. B. 40 °C bis 60 °C erwärmt, um die Verbindung zwischen dem ersten und zweiten Ausgießmaterial zu verbessern.

Alternativ oder zusätzlich kann der Gewebeblock auch erst nach dem Ausgießen mit dem zweiten Ausgießmaterial auf eine vorgegebene Temperatur erwärmt werden, um eine bessere Verbindung zwischen dem ersten und zweiten Ausgießmaterial herzustellen.

Gemäß einer bevorzugten Ausführungsform der Erfindung hat das zweite Ausgießmaterial eine andere Farbe als das erste Ausgießmaterial. Dies hat den Vorteil, dass ein vom Gewebeblock abgetrennter Schnitt ein Raster aufweist, durch welches die Felder, in denen sich die Gewebeproben befinden, klar voneinander abgegrenzt sind - vergleichbar mit dem Raster eines Karoblocks.

Nach der Herstellung eines Gewebeblocks kann das erfindungsgemäße Verfahren des Weiteren folgende Schritte umfassen:
- der Gewebeblock wird nach seiner Herstellung in dünne Scheiben geschnitten;
- die Scheiben werden auf Objektträgern, wie z. B. Glasplättchen, angeordnet;
- es werden wenigstens ein Bild des Gewebeblocks (von der Schnittfläche her) und wenigstens ein Bild einer der davon abgetrennten Scheiben aufgezeichnet, wenn sich die Scheibe auf einem Objektträger befindet; und
- schließlich wird ein Bildervergleich der Bilder durchgeführt, um die Orientierung der Scheibe auf dem jeweiligen Objektträger zu bestimmen.

Anhand des genannten Bildvergleichs zwischen dem Bild des Gewebeblocks und den Bildern einzelner Scheiben des Gewebeblocks kann erkannt werden, ob die jeweilige Scheibe in der richtigen Orientierung auf den Objektträger aufgezogen wurde. Unrichtig aufgezogene Scheiben können ggf. am Objektträger oder in einer Software-Applikation entsprechend markiert werden, so dass der diagnostizierende Arzt bzw. ein Assistent die begutachtete Gewebeprobe richtig zuordnen kann und keine Zuordnungsfehler unterlaufen.

Gemäß einer bevorzugten Ausführungsform der Erfindung wird zu den Bildern der einzelnen Schnitte jeweils ein passendes Bild des Gewebeblocks aufgenommen. Das Bild des Gewebeblocks kann z. B. immer direkt vor oder direkt nach einem Schnitt aufgezeichnet und das Bild dann mit dem zugehörigen Schnitt verglichen werden.

Der Bildvergleich kann prinzipiell von einer Person mit dem Auge oder mittels eines Bilderkennungssystems automatisch durchgeführt werden. Ein Bilderkennungssystem kann z. B. eine oder mehrere Kameras sowie eine Bildverarbeitungssoftware zur Mustererkennung umfassen, wie sie in vielen anderen Bereichen der Medizin bereits eingesetzt wird. Die Software kann auf einem künstlichen neuronalen Netz basieren.

Die vorliegende Erfindung gemäß der ersten Variante betrifft auch einen mehrere Gewebeproben enthaltenden Gewebeblock. Der Gewebeblock umfasst dabei:
- ein erstes Ausgießmaterial, in dem die Gewebeproben eingebettet sind und
- ein zweites Ausgießmaterial, das auf dem ersten Ausgießmaterial angeordnet ist; in dem zweiten Ausgießmaterial ist dabei keine Probe eingebettet;
- wobei eine dem zweiten Ausgießmaterial zugewandte Oberfläche des ersten Ausgießmaterials eine oder mehrere Vertiefungen aufweist, die Freiräume definieren, welche vom zweiten Ausgießmaterial wenigstens teilweise gefüllt sind.

Die vorliegende Erfindung gemäß der zweiten Variante betrifft ferner einen mehrere Gewebeproben enthaltenden Gewebeblock, umfassend:
- ein erstes Ausgießmaterial, in dem die Gewebeproben eingebettet sind;
- wobei der Gewebeblock ferner eine um die Gewebeproben außen herum verlaufende Wand aufweist, die aus dem ersten Ausgießmaterial besteht; und
- ein zweites Ausgießmaterial, das in einem Raum innerhalb der Wand auf dem ersten Ausgießmaterial bzw. den darin eingebetteten Gewebeproben angeordnet ist.

Bei den Ausgießmaterialien kann es sich wiederum um gleiche oder verschiedene Materialien handeln. Hierzu wird auf die vorstehenden Erläuterungen Bezug genommen.

Gemäß einer speziellen Ausführungsform der Erfindung kann das zweite Ausgießmaterial ein Material sein, welches die Eigenschaft besitzt, sich mit dem Material eines Objektträgers, auf dem eine Scheibe des Gewebeblocks nach dem Schneiden angeordnet ist, so stark zu verbinden, dass es auch nach dem Entfernen des ersten Ausgießmaterials (in einem so genannten Entparaffinier-Prozess) vom Objektträger noch auf diesem verbleibt und dort sichtbar ist. Dies hat den Vorteil, dass das Raster auch noch nach dem Entparaffinieren auf dem Objektträger sichtbar ist.

Der erfindungsgemäße Gewebeblock kann ferner einen Orientierungsmarker aufweisen, der nach dem Schneiden des Gewebeblocks die Orientierung der einzelnen Scheiben auf den Objektträgern anzeigt. Bei dem Orientierungsmarker kann es sich z. B. um einen an einer Seitenfläche des Gewebeblocks angeordneten Vorsprung oder eine Aussparung handeln. Grundsätzlich ist jede Struktur als Orientierungsmarker geeignet, die den späteren Schnitten des Gewebeblocks eine "Asymmetrie" verleiht.

Ein Orientierungsmarker kann z. B. mittels einer Ausgießform hergestellt werden, die mit einer entsprechenden Orientierungsmarker-Struktur versehen ist. Die Orientierungsmarker-Struktur kann z. B. eine Ausnehmung oder ein Vorsprung sein, die bzw. der nach dem Ausgießen mit dem ersten Ausgießmaterial ein negatives Bild davon als Orientierungsmarker am Gewebeblock hinterlässt. So erzeugt z. B. eine an einer Seitenwand der Ausgießform vorgesehene Ausnehmung einen entsprechenden Vorsprung in der Seitenwand des Gewebeblocks.

Wahlweise kann auch der vorstehend beschriebene Rahmen oder die Ausgabeöffnung einer Ausgießmaterial-Dosiereinrichtung eine entsprechende Struktur aufweisen, die dann einen an den Schnitten sichtbaren Orientierungsmarker erzeugt. Sofern das zweite Ausgießmaterial eine andere Farbe aufweist als das erste Ausgießmaterial, ist der Orientierungsmarker farblich abgesetzt und damit besonders gut erkennbar.

Die vorliegende Erfindung betrifft ferner eine Anordnung zum Herstellen eines mehrere Gewebeproben enthaltenden Gewebeblocks, umfassend:
- eine Ausgießform mit mehreren am Boden der Ausgießform angeordneten Fächern, die durch eine oder mehrere Zwischenwände voneinander abgegrenzt sind;
- wobei die Ausgießform im Bereich wenigstens eines der Fächer eine Orientierungsmarker-Struktur aufweist, die an einem damit hergestellten Gewebeblock einen entsprechenden Orientierungsmarker entstehen lässt, wenn die Ausgießform mit dem ersten Ausgießmaterial gefüllt wird.

Die Anordnung kann außerdem einen Hilfsträger zum Halten des Gewebeblocks umfassen, der durch das Ausgießen der Form mit dem ersten Ausgießmaterial am halbfertigen Gewebeblock angeformt wird. Die Ausgießform und der Hilfsträger sind vorzugsweise geometrisch so aneinander angepasst, dass der Hilfsträger an seinem seitlichen Randbereich an der Ausgießform anliegt und die Ausgießform dort gegenüber der Umgebung abdichtet.

Der Hilfsträger und die Ausgießform können beispielsweise so dimensioniert sein, dass der Hilfsträger formschlüssig in die Ausgießform eingesetzt werden kann. Alternativ oder zusätzlich kann der Hilfsträger an einer dem Gewebeblock zugewandten Unterseite eine Auflagefläche aufweisen, die auf einer korrespondierenden Auflagefläche der Ausgießform aufliegt und diese dort gegenüber der Umgebung abdichtet.

Der Hilfsträger und die Ausgießform können außerdem so dimensioniert sein, dass der Hilfsträger an einem mittleren Bereich auf wenigsten einer Zwischenwand aufliegt, wenn der Hilfsträger auf der Ausgießform angeordnet ist. Der Hilfsträger hat vorzugsweise eine oder mehrere Öffnungen, durch die das Ausgießmaterial in die Ausgießform eingefüllt werden kann, wenn der Hilfsträger auf der Ausgießform angeordnet ist.

Der Hilfsträger und die Ausgießform sind vorzugsweise so ausgelegt, dass eine in einem der Fächer liegende Gewebeprobe nicht aus ihrem Fach in ein anderes Fach übertreten kann. Dies kann beispielsweise dadurch erreicht werden, dass die Zwischenwände bis an die Unterseite des Hilfsträgers heranreichen, wenn der Hilfsträger auf der Ausgießform angeordnet ist, oder dadurch, dass ein Element, wie z. B. ein Schwamm, über die Fächer gelegt wird, das eine Barriere für die Gewebeproben darstellt, aber das Ausgießmaterial durchlässt.

Die vorliegende Erfindung gemäß der zweiten Variante betrifft ferner eine Ausgießform zum Herstellen eines mehrere Gewebeproben enthaltenden Gewebeblocks, insbesondere eines Gewebe-Wachsblocks, mit mehreren darin angeordneten Fächern, die durch eine oder mehrere Zwischenwände voneinander abgegrenzt sind; und mit einer um die Fächer grabenartig umlaufenden Vertiefung, die nach dem Ausgießen mit dem ersten Ausgießmaterial eine Wand bzw. eine Rahmen entstehen lässt, der die Gewebeproben umgibt.

Die vorstehend genannte, grabenartige Vertiefung hat vorzugsweise einen Boden, der tiefer ist als der Boden der Fächer. Der daraus resultierende Rahmen des halbfertigen Gewebeblocks ist entsprechend höher als die innerhalb liegenden Bereiche, in denen sich die Gewebeproben befinden.

Im Folgenden wird nun eine dritte Variante der Erfindung beschrieben, bei der die Ausgießform eine herausnehmbare Bodenstruktur aufweist, die nach dem Ausgießen der Form zusammen mit dem ersten Ausgießmaterial im gehärteten Zustand aus der Ausgießform entnommen wird. Die Struktur bildet in diesem Fall einen Teil des fertigen Gewebeblocks und verbleibt im Gewebeblock.

Dementsprechend betrifft die vorliegende Erfindung auch ein Verfahren zum Herstellen eines mehrere Gewebeproben enthaltenden Gewebeblocks mit folgenden Schritten:
- Bereitstellen einer Ausgießform mit mehreren Fächern, die durch eine oder mehrere Zwischenwände voneinander abgegrenzt sind, wobei die Zwischenwand bzw. Zwischenwände als eine separate Struktur ausgebildet sind, die in die Ausgießform eingesetzt bzw. daraus entnommen werden kann;
- Einlegen jeweils einer Gewebeprobe in die einzelnen Fächer;
- Anordnen eines Hilfsträgers auf der Ausgießform;
- Füllen der Ausgießform mit einem ersten Ausgießmaterial;
- Entformen des Gewebeblocks aus der Ausgießform zusammen mit der Struktur, welche im ersten Ausgießmaterial eingebettet ist.

Die Struktur kann grundsätzlich aus dem gleichen oder aus einem anderen Material bestehen wie das erste Ausgießmaterial. Gemäß einer bevorzugten Ausführungsform der Erfindung bestehen beide Materialien aus Wachs bzw. Paraffin. Alternativ könnte die Struktur auch aus einem weichen Kunststoff und das erste Ausgießmaterial aus Wachs bestehen.

Um zu verhindern, dass die Struktur beim Einfüllen des ersten Ausgießmaterials vollständig schmilzt und die Anordnung der Gewebeproben in den einzelnen Fächern nicht mehr gewährleistet ist, können verschiedene Maßnahmen getroffen werden. So kann beispielsweise das Material der Struktur, deren Dicke und/oder Temperatur und/oder die Temperatur des flüssigen ersten Ausgießmaterials in geeigneter Weise eingestellt werden. Dicke Zwischenwände werden eher langsam schmelzen also dünne. Der Boden der Ausgießform kann z. B. gekühlt werden. Außerdem kann für die Struktur ein Material gewählt werden, das eine etwas höhere Schmelztemperatur aufweist wie das erste Ausgießmaterial.

Beide Materialien können ferner, wie schon in Bezug auf die erste Variante der Erfindung beschrieben, unterschiedliche Farben aufweisen.

Nach dem Entformen kann der Gewebeblock bei Bedarf auf eine vorgegebene Temperatur erwärmt werden, um die Materialverbindung zwischen der Struktur und dem ersten Ausgießmaterial zu verbessern.

Die dritte Variante der Erfindung betrifft ferner einen mehrere Gewebeproben enthaltenden Gewebeblock, wobei der Gewebeblock umfasst:
- ein erstes Ausgießmaterial, in dem die Gewebeproben eingebettet sind;
- eine Struktur aus einem zweiten Material, die im ersten Ausgießmaterial eingebettet ist und verschiedene Bereiche des Gewebeblocks, in denen sich die Gewebeproben befinden, in einer lateralen Richtung voneinander abgrenzt.

Die Struktur kann z. B. eine Gitterstruktur aufweisen.

Der Gewebeblock kann ferner einen Orientierungsmarker aufweisen, wie vorstehend beschrieben wurde.

Schließlich betrifft die dritte Variante der Erfindung auch noch eine Anordnung zum Herstellen eines mehrere Gewebeproben enthaltenden Gewebeblocks, umfassend eine Ausgießform mit mehreren am Boden der Ausgießform angeordneten Fächern, die durch eine oder mehrere Zwischenwände voneinander abgegrenzt sind, wobei die Zwischenwand bzw. Zwischenwände als eine separate Struktur ausgeführt sind, die in die Ausgießform eingesetzt bzw. daraus entnommen werden kann. Die Struktur kann neben wenigstens einer Wand auch einen Boden aufweisen.

Die Anordnung zum Herstellen des Gewebeblocks umfasst vorzugsweise einen Hilfsträger zum Halten des Gewebeblocks, wobei die Ausgießform und der Hilfsträger geometrisch so aufeinander angepasst sind, dass der Hilfsträger an einem seitlichen Randbereich an der Ausgießform anliegt. Die Zwischenwände können ferner so hoch sein, dass sie bis an den Hilfsträger heranreichen, wenn der Hilfsträger auf der Ausgießform angeordnet ist.

Bezüglich der Eigenschaften, des Materials oder des Aufbaus der Ausgießform oder des Hilfsträgers gemäß der dritten Variante gelten dieselben Aussagen, wie sie vorstehend bezüglich der ersten oder zweiten Variante gemacht wurden.

Im Folgenden wird nun eine vierte Variante der Erfindung beschrieben, bei der die Ausgießform mehrere Fächer aufweist, die dazu ausgelegt sind, eine oder mehrere Gewebeproben darin aufzunehmen. Nach dem Einlegen der Gewebeproben in die Fächer werden diese mit einem Ausgießmaterial, insbesondere Wachs, gefüllt und die Gewebeproben darin eingebettet. Die Ausgießform selbst ist mittels eines Mikrotoms schneidbar und bildet bei dieser Variante einen Teil des Gewebeblocks. Sie besteht vorzugsweise aus Wachs oder einem anderen geeigneten Material mit vergleichbarer Härte, das nach der Herstellung des Gewebeblocks verschleißarm mittels eines Mikrotoms geschnitten werden kann.

Dementsprechend betrifft die vorliegende Erfindung auch ein Verfahren zum Herstellen eines mehrere Gewebeproben enthaltenden Gewebeblocks, insbesondere eines Gewebe-Wachsblocks, mit folgenden Schritten:
- Bereitstellen einer Ausgießform mit mehreren Fächern, die dazu ausgelegt sind, eine oder mehrere Gewebeproben darin aufzunehmen;
- Einlegen jeweils einer Gewebeprobe in die einzelnen Fächer;
- Verbinden eines Hilfsträgers mit der Ausgießform; und
- Füllen der Fächer mit einem Ausgießmaterial, insbesondere Wachs.

Die Ausgießform wird vorzugsweise mit Hilfe einer Form (Negativform) hergestellt, indem die Form mit einem Ausgießmaterial, insbesondere Wachs, gefüllt wird, das nach dem Erkalten die Ausgießform bildet. Wahlweise könnten die Fächer natürlich auch aus einem fertigen Wachsblock bzw. Materialblock herausgearbeitet werden.

Gemäß einer bevorzugten Ausführungsform der Erfindung wird der Hilfsträger auf die Form gesetzt und die Form dann mit dem Ausgießmaterial, insbesondere Wachs, gefüllt, so dass sich der Hilfsträger nach dem Erstarren des Ausgießmaterials mit der Ausgießform verbindet.

Das vorstehend beschriebene Anformen bzw. Verbinden des Hilfsträgers mit der Ausgießform kann gleichzeitig mit oder ggf. auch nach dem Herstellen der Ausgießform erfolgen.

Die vierte Variante der Erfindung betrifft auch einen Gewebeblock mit mehreren darin eingebetteten Gewebeproben, umfassend:
- ein erstes Material, das mehrere Fächer aufweist, die dazu ausgelegt sind, eine oder mehrere Gewebeproben darin aufzunehmen;
- mehrere in den Fächern angeordnete Gewebeproben; und
- ein Ausgießmaterial, das in einem heißen, flüssigen Zustand in die Fächer eingefüllt wurde, um die Gewebeproben einzubetten.

Der Gewebeblock ist vorzugsweise mit einem Hilfsträger verbunden, der dazu vorgesehen ist, in eine Schneidvorrichtung (Mikrotom) eingespannt zu werden.

Gemäß einer bevorzugten Ausführungsform der Erfindung ist das Material der Ausgießform und/oder das Ausgießmaterial Wachs.

Die vierte Variante der Erfindung betrifft ferner eine Anordnung zum Herstellen eines mehrere Gewebeproben enthaltenden Gewebeblocks, insbesondere eines Gewebe-Wachsblocks, umfassend:
- eine Ausgießform aus Wachs mit mehreren darin angeordneten Fächern; die dazu ausgelegt sind, eine oder mehrere Gewebeproben darin aufzunehmen; und
- einen Hilfsträger, der an einer Unterseite des Ausgießform angeordnet und dazu vorgesehen ist, in eine Schneidvorrichtung (Mikrotom) eingespannt zu werden.

Die vorstehend, in Zusammenhang mit anderen Varianten beschrieben Optionen sind in gleichem Maße auch bei der zuletzt beschriebenen vierten Variante realisierbar. So kann z. B. der Gewebeblock gemäß der dritten Variante auch mit einem Orientierungsmarker versehen sein oder Materialien unterschiedlicher Farbe aufweisen.

### Kurze Beschreibung der Zeichnungen

Die Erfindung wird nachstehend anhand der beigefügten Zeichnungen beispielhaft näher erläutert. Es zeigen:
Fig. 1 ein Verfahren zur Verarbeitung und Diagnose von Biopsieproben gemäß dem Stand der Technik;
Fig. 2a, 2b verschiedene Prozessschritte eines anderen bekannten Verfahrens zur Verarbeitung und Diagnose von Biopsieproben, bei dem mehrere Gewebeproben in einem Gewebe-Wachsblock integriert sind;
Fig. 3 ein Verfahren zur Verarbeitung von Biopsieproben gemäß der Erfindung;
Fig. 4a-4c verschiedene Ansichten einer ersten Variante einer erfindungsgemäßen Ausgießform zum Herstellen eines Gewebe-Wachsblocks;
Fig. 5a-5i verschiedene Prozessschritte eines erfindungsgemäßen Verfahrens zum Herstellen eines Gewebe-Wachsblocks;
Fig. 6 einen alternativen Prozessschritt des Verfahrens von Fig. 5;
Fig. 7a, 7b verschiedene Ansichten einer speziellen Variante einer Ausgießform zum Herstellen eines Gewebe-Wachsblocks mit einem umlaufenden, integrierten Rahmen;
Fig. 8 eine Seitenansicht eines mittels der Ausgießform von Fig. 7a, 7b hergestellten Gewebe-Wachsblocks mit einem umlaufenden, integrierten Rahmen;
Fig. 9a-d mehrere von einem Gewebe-Wachsblock abgetrennte Scheiben, die in unterschiedlicher Orientierung auf einen Objektträger aufgezogen worden sind;
Fig. 10 eine Draufsicht auf eine Ausgießform mit einer Orientierungsmarker-Struktur;
Fig. 11 das Aufziehen einer Scheibe auf einen Objektträger;
Fig. 12 mehrere von einem Gewebe-Wachsblock abgetrennte Scheiben mit Markierungsmarker, die in unterschiedlicher Orientierung auf einen Objektträger aufgezogen worden sind;
Fig. 13a,b den Schritt des Entparaffinierens einer auf einem Objektträger befindlichen Scheibe gemäß einer ersten Ausführungsform der Erfindung;
Fig. 14a,b den Schritt des Entparaffinierens einer auf einem Objektträger befindlichen Scheibe;
Fig. 15a eine schematische Darstellung eines Gewebe-Wachsblocks mit mehreren darin enthaltenen Gewebeproben in einer Draufsicht von der Schnittseite her betrachtet;
Fig. 16a, b verschiedene vom Gewebe-Wachsblock von Fig. 13 abgetrennte Scheiben, die in unterschiedlicher Orientierung auf einen Objektträger aufgezogen worden sind;
Fig. 17 eine perspektivische Ansicht einer Ausgießform gemäß einer zweiten Variante der Erfindung mit einer in die Ausgießform einsetzbaren Struktur in Form eines Rasters;
Fig. 18 eine perspektivische Ansicht eines mit der Anordnung von Fig. 15 hergestellten Gewebe-Wachsblocks;
Fig. 19 eine Draufsicht auf eine Ausgießform gemäß einer weiteren Ausführungsform;
Fig. 20 einen alternativen Prozessschritt bei der Herstellung eines Gewebe-Wachsblocks, bei dem die Gewebeproben vor dem Ausgießen mit dem ersten Ausgießmaterial mit einem Schwamm abgedeckt werden;
Fig. 21 ein Verfahren zum Herstellen eines mehrere Gewebeproben enthaltenden Gewebeblocks in einem zweistufigen Ausgießverfahren;
Fig. 22 ein Verfahren zum Herstellen eines mehrere Gewebeproben enthaltenden Gewebeblocks in einem einstufigen Ausgießverfahren;
Fig. 23 eine Seitenansicht einer vierten Variante einer erfindungsgemäßen Ausgießform zum Herstellen eines Gewebe-Wachsblocks;
Fig. 24 eine Seitenansicht der Ausgießform von Fig. 23 mit darin eingelegten Gewebeproben;
Fig. 25 eine Seitenansicht eines Gewebe-Wachsblocks, der mit Hilfe der in Fig. 26 dargestellten Ausgießform hergestellt wurde; und
Fig. 26 eine Seitenansicht einer Form zur Herstellung der Ausgießform von Fig. 23;
Fig. 27 verschiedene Verfahrensschritte eines Verfahrens zum Herstellen eines mehrere Gewebeproben enthaltenden Gewebeblocks gemäß der vierten Variante der vorliegenden Erfindung.

### Ausführungsformen der Erfindung

Bezüglich der Erläuterung der Fig. 1 und Fig. 2 wird auf die Beschreibungseinleitung verwiesen.

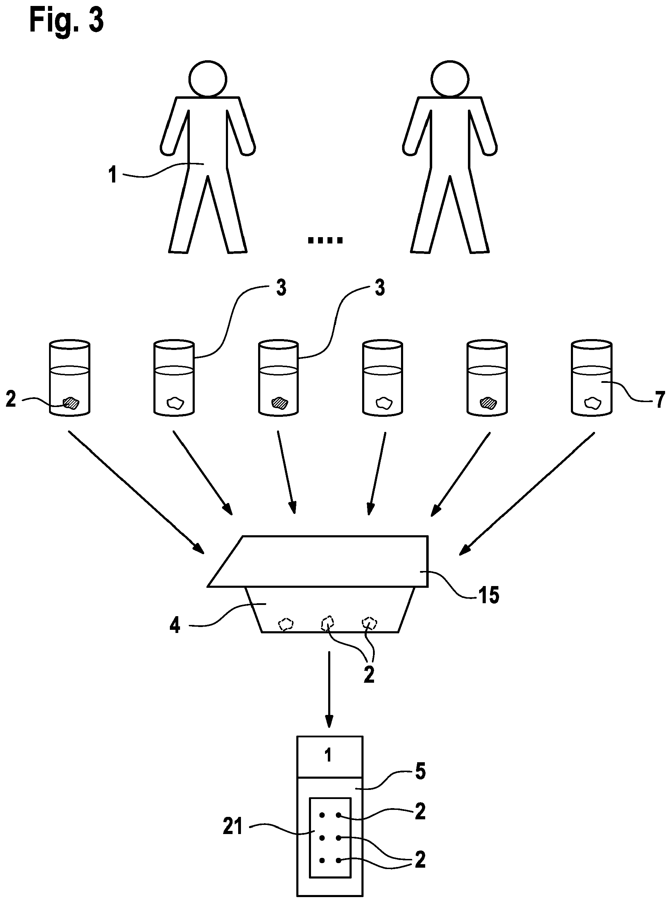

Fig. 3 zeigt verschiedene Schritte in einem Verfahren zum Verarbeiten von Gewebeproben. Im dargestellten Beispiel wird verschiedenen Patienten 1 jeweils eine oder mehrere Gewebeproben 2 entnommen. Dies kann beispielsweise in einem Krankenhaus oder in einer Arztpraxis erfolgen. Die Gewebeproben 2 werden dann jeweils einzeln in Probengefäße 3 gelegt, die mit einer Fixierlösung 7, wie z.B. Formalin, befüllt sind. Die Probengefäße 3 werden danach zur weiteren Verarbeitung an ein Labor geschickt. Dort werden die Proben 2 zunächst entwässert und dann gemeinsam in einen Gewebe-Wachsblock 4 eingebettet, an dem ein Hilfsträger 15 befestigt ist. Bei dem Hilfsträger 15 kann es sich beispielsweise um das Bodenteil einer Standardgewebekassettehandeln, die am Gewebe-Wachsblock 4 angegossen ist, so dass sie nach dem Ausgießen daran haftet. Der fertige Gewebe-Wachsblock 4 wird dann mittels eines Mikrotoms (nicht gezeigt) in sehr dünne Scheiben 21 geschnitten. Die Scheiben 21 bzw. "Schnitte" werden anschließend jeweils auf einen Objektträger 5 - in der Regel ein Glasplättchen - aufgezogen. Wie im untersten Bild der Fig. 3 zu erkennen ist, sind die Gewebeproben 2 in einem Raster angeordnet. Dies bietet den wesentlichen Vorteil, dass die Gewebeproben 2 eindeutig einem bestimmten Patienten oder einem bestimmten Entnahmeort zugeordnet worden können. Wie ferner zu erkennen ist, enthält die Scheibe 21 auch keinen weiteren Fremdstoff zwischen den Gewebeproben 2, der das Schneiden des Gewebe-Wachsblocks 4 erschweren würde. Das erfindungsgemäße Verfahren und die hierzu notwendigen Gerätschaften werden im Folgenden im Detail erläutert.

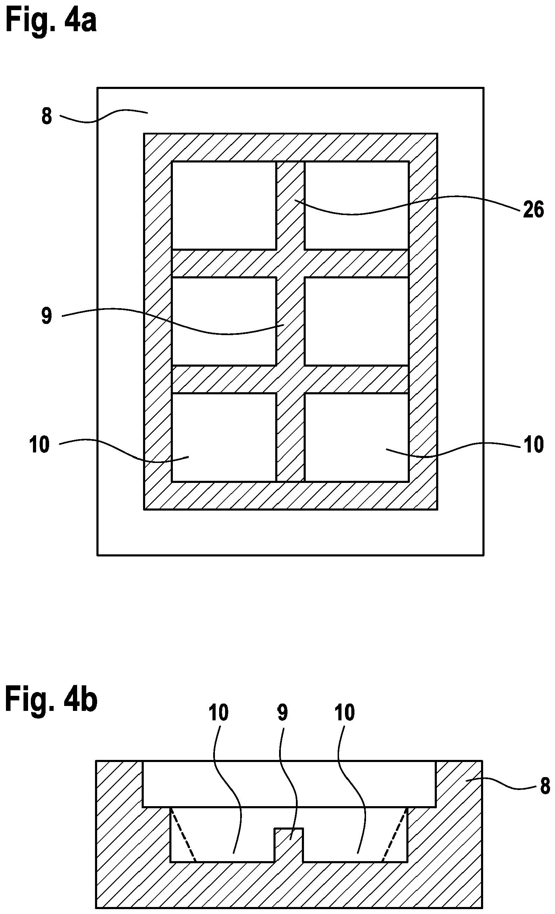

Fig. 4a bis 4c zeigt verschiedene Ansichten einer Ausgießform 8 zum Herstellen eines Gewebe-Wachsblocks 4 gemäß einer ersten Variante der Erfindung. Bei der Ausgießform 8 handelt es sich um ein wannenförmiges Teil mit einem Boden und Seitenwänden, das beispielsweise aus Metall, einem Kunststoff oder aus Silikon hergestellt sein kann. Eine Ausführung in Silikon hat den Vorteil, dass sie flexibel und glatt ist und der darin hergestellte Gewebe-Wachsblock 4 somit einfach und schnell entnommen werden kann.

Am Boden der Ausgießform 8 befindet sich eine Struktur 26 aus mehreren Zwischenwänden 9, die bei dieser Variante ein integraler Bestandteil der Ausgießform 8 sind. Die Zwischenwände 9 unterteilen den Boden der Ausgießform 8 in mehrere Fächer 10, die dazu vorgesehen sind, jeweils eine oder mehrere Gewebeproben 2 aufzunehmen.

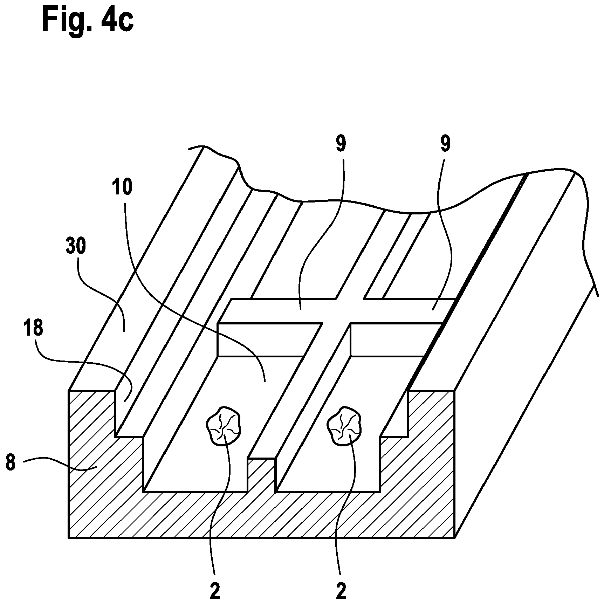

Fig. 4c zeigt eine perspektivische Ansicht der Ausgießform 8, bei der in jedem Fach 10 eine Gewebeprobe 2 angeordnet ist. Die Gewebeproben 2 werden im Folgenden mit einem ersten Ausgießmaterial, insbesondere Wachs 16, übergossen, um zunächst einen halbfertigen Gewebe-Wachsblock 4 zu erzeugen.

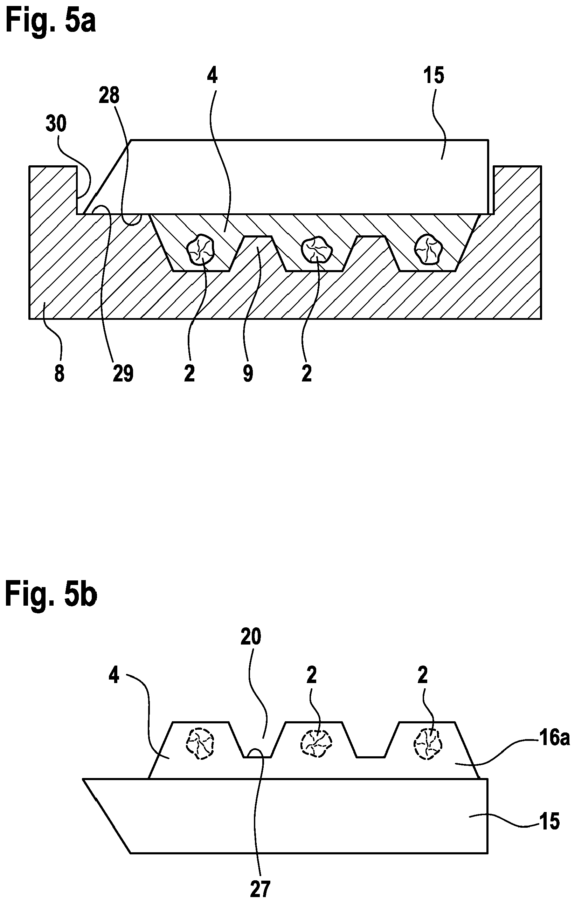

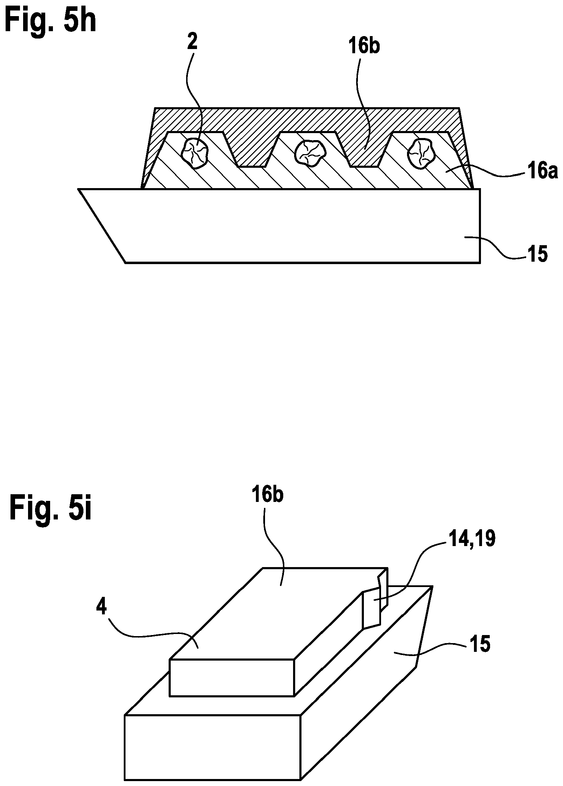

Die Figuren 5a bis 5i zeigen verschiedene weitere Prozessschritte, in denen der halbfertige Gewebeblock 4 weiterverarbeitet und dabei ein zweiter Ausgießprozess durchgeführt wird, um den fertigen Gewebeblock 4 herzustellen. An dieser Stelle soll noch angemerkt werden, dass der Begriff "Wachs" als Synonym für jedes beliebige wachsartige Material verwendet wird, insbesondere auch für Paraffin oder Materialien mit ähnlichen Eigenschaften.

Nach dem Anordnen der Gewebeproben 2 in den einzelnen Fächern 10 der Ausgießform 8 (siehe Fig. 4c) wird ein Hilfsträger 15 in die Ausgießform 8 eingesetzt. Wie in Fig. 5a zu erkennen ist. , sind der Hilfsträger 15 und die Ausgießform 8 so aneinander angepasst, dass der Hilfsträger 15 an seinem Randbereich an der Ausgießform 8 aufliegt und die Ausgießform 8 dort gegenüber der Umgebung abdichtet. Eine Auflagefläche 28 des Hilfsträgers 15 liegt hier auf einer korrespondierenden Auflagefläche 29 der Ausgießform 8 auf.

Die Ausgießform 8 hat an ihrem seitlichen Umfang ferner eine umlaufende Stufe 30 bzw. Begrenzung mit einer Seitenwand 18, die dazu dient, den Hilfsträger 15 in einer vorgegebenen Position in der Ausgießform 8 anzuordnen. Nachdem der Hilfsträger 15 wie gezeigt angeordnet wurde, wird ein erstes Ausgießmaterial 16a, insbesondere Wachs 16a, in die Ausgießform 8 gefüllt. Der Hilfsträger 15 umfasst mehrere Öffnungen (nicht gezeigt), durch die das erste Ausgießmaterial 16a in die darunter liegenden Fächern 10 zu den Gewebeproben 2 gelangen kann.

Nach dem Erkalten des Wachses wird der gesamte Gewebe-Wachsblock 4 zusammen mit dem daran angeformten Hilfsträger 15 aus der Ausgießform 8 entnommen. Die Innenwände der einzelnen Fächer 10 können gegebenenfalls auch schräg nach innen abfallen, wie in Fig. 4b in gestrichelten Linien dargestellt ist, um das Entformen des Gewebe-Wachsblocks 4 aus der Ausgießform 8 zu erleichtern.

Die Höhe der Zwischenwände 9 ist vorzugsweise so dimensioniert, dass sie bis an die Unterseite des Hilfsträgers 15 heranreichen und diesen berühren, wenn der Hilfsträger 15 in die Ausgießform 8 eingesetzt ist. Dadurch wird insbesondere verhindert, dass einzelne Gewebestückchen von einem Fach 10 in ein benachbartes Fach 10 gelangen können und somit die benachbarte Gewebeprobe 2 kontaminieren. Wahlweise könnten die Zwischenwände 9 aber auch im Abstand zum Hilfsträger 15 enden.

Fig. 5b zeigt die aus der Ausgießform 8 entnommene Gewebeblock-Anordnung, die nach dem Entformen umgedreht wurde. Entsprechend befindet sich der Hilfsträger 15 unten und der Gewebe-Wachsblock 4 oben. Wie zu erkennen ist, hat die Oberfläche des zweiten Ausgießmaterials 16a mehrere Vertiefungen 27, die durch die Zwischenwände 9 der Struktur 26 als Abdruck derselben entstanden sind. Der in Fig. 5b dargestellte Gewebe-Wachsblock 4 ist noch nicht schneidbar, da die einzelnen Schnitte in lauter Teilstücke zerfallen würden. Der halbfertige Gewebe-Wachsblock 4 wird daher im Folgenden nochmals in einem zweiten Ausgießschritt mit flüssigem Ausgießmaterial 16b übergossen, um einen einheitlichen Gewebe-Wachsblock 4 zu erhalten.

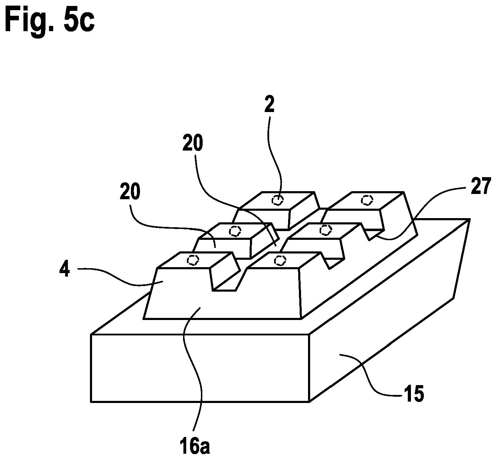

Fig. 5c zeigt eine perspektivische Ansicht des halbfertigen Gewebe-Wachsblocks 4 von oben. Darin sind insbesondere die durch die Vertiefungen 27 gebildeten Freiräume 20 zwischen den einzelnen Gewebeproben 2 gut erkennbar.

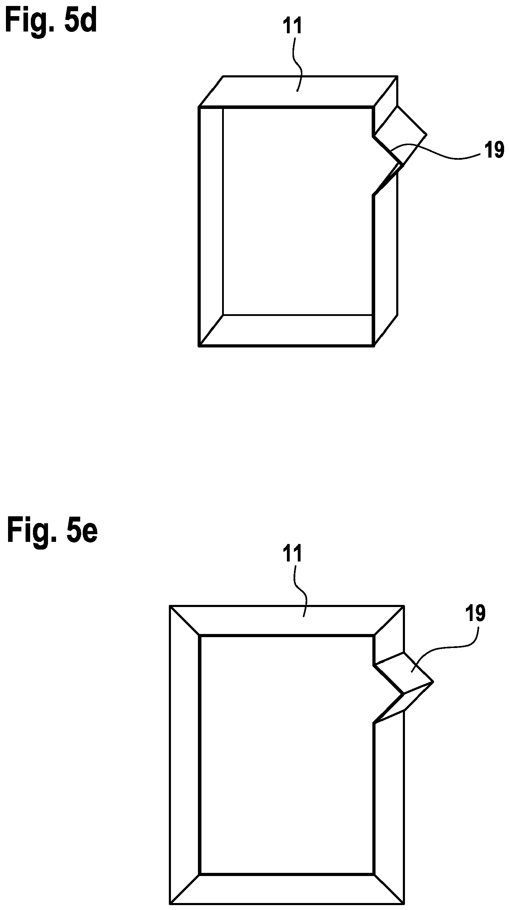

Die Fig. 5d und 5e zeigen einen Rahmen 11, der dazu ausgelegt ist, auf den halbfertigen Gewebe-Wachsblock 4 aufgesetzt zu werden. Der Rahmen 11 ist so dimensioniert, dass er den Gewebe-Wachsblock seitlich umgibt und auf dem Hilfsträger 15 aufliegt, um den Innenraum gegenüber der Umgebung abzudichten.

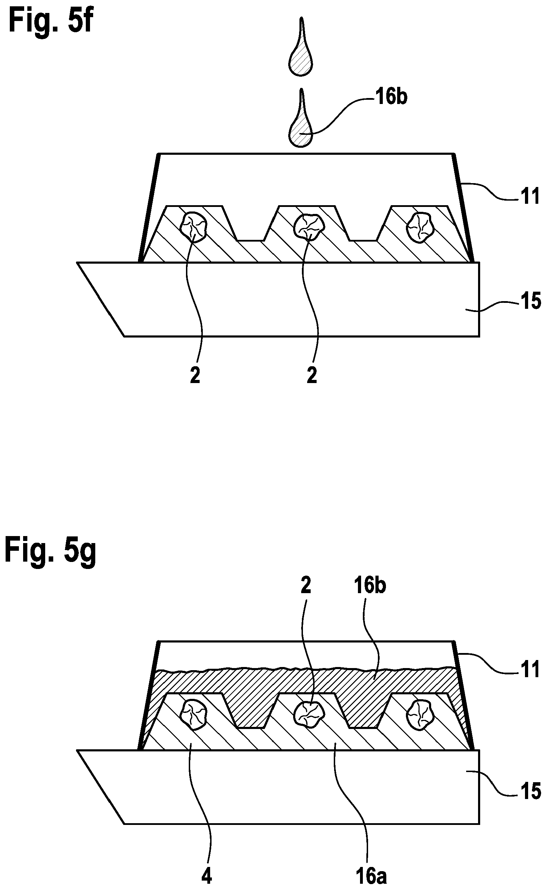

In dem in Fig. 5f dargestellten Verfahrensschritt wird dann ein zweites Ausgießmaterial in den Rahmen 11 gegossen, um die Freiräume 20 zu füllen. Fig. 5g zeigt die Anordnung schließlich im vollständig befüllten Zustand.

Der Rahmen 11 hat schräg nach außen verlaufende Seitenwände, wodurch das Lösen des Rahmens 11 nach dem Ausgießen mit Wachs leichter von statten geht. Der Rahmen 11 umfasst ferner eine Orientierungsmarker-Struktur 19, die dazu dient, im fertigen Gewebe-Wachsblock 4 einen Orientierungsmarker 14 herzustellen. Anhand des Orientierungsmarkers 14 lassen sich später die Orientierung der auf den Objektträgern 5 aufgezogenen Schnitte 21 des Gewebe-Wachsblocks 4 einfach feststellen und Fehler bei der Zuordnung der einzelnen Gewebeproben vermeiden. Die Orientierungsmarker-Struktur 19 ist im vorliegenden Fall eine in der Seitenwand des Rahmens 11 vorgesehene Einbuchtung. Wahlweise könnte aber auch ein nach innen weisender Vorsprung oder eine andere Struktur vorgesehen sein. Selbstverständlich kann auch mehr als eine Orientierungsmarker-Struktur 19 vorhanden sein.

Fig. 5h zeigt eine Gewebeblock-Anordnung in einem Zustand, nachdem der Rahmen 11 wieder abgenommen wurde. In der dargestellten Schnittansicht ist die Oberflächenstruktur mit den Vertiefungen 27 im ersten Ausgießmaterial 16a sowie das darüber liegende zweite Ausgießmaterial 16b gut zu erkennen.

Um die mechanische Verbindung zwischen den beiden Ausgießmaterialien 16a, 16b zu verbessern, können ggfs. verschiedene Maßnahmen getroffen werden. Zum einen kann das erste Ausgießmaterial 16 noch vor dem Auftragen des zweiten Ausgießmaterials 16 auf eine vorgegebene Temperatur, wie z.B. 40°C bis 60°C erwärmt werden. Alternativ oder zusätzlich kann auch der fertige Gewebe-Wachsblock, wie er in Fig. 5h dargestellt ist, nachträglich erwärmt werden.

Nach der Herstellung des Gewebe-Wachsblocks 4 kann dieser nun in ein Mikrotom eingespannt und in dünne Scheiben geschnitten werden. Bevor auf die weiteren Verfahrensschritte bei der Verarbeitung der Gewebeproben 2 näher eingegangen wird, soll zunächst noch eine alternative Methode zur Aufbringung des zweiten Ausgießmaterials 16b auf den halbfertigen Gewebe-Wachsblock 4 beschrieben werden.

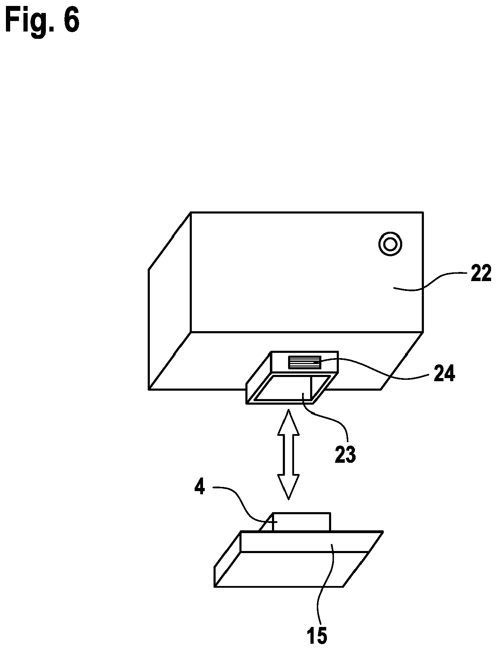

Fig. 6 zeigt eine schematische Ansicht eines Ausgießmaterials-Spenders 22 mit einer Ausgabeöffnung 23, an der das zweite Ausgießmaterial 16b in einzelnen Dosen ausgegeben wird. Hierzu wird die Gewebeblock-Anordnung, wie sie beispielhaft in Fig. 5c gezeigt ist, in die Ausgabeöffnung 23 eingesetzt und dann eine Dosis des zweiten Ausgießmaterials 16b aufgebracht. Die Ausgabeöffnung 23 und die Gewebeblock-Anordnung sind dabei geometrisch so aneinander angepasst, dass die Ausgabeöffnung 23 gegenüber der Umgebung abgedichtet wird, wenn der Gewebe-Wachsblock 4 von unten in die Ausgabeöffnung 23 gedrückt wird.

Im Bereich der Ausgabeöffnung 23 des Ausgießmaterial-Spenders 22 kann eine Kühlvorrichtung 24 vorgesehen sein, um das Abkühlen und Erstarren des Gewebe-Wachsblocks 4 zu beschleunigen. Alternativ oder zusätzlich kann auch eine Heizvorrichtung vorgesehen sein, um das Anhaften von Ausgießmaterial 16b im Bereich der Ausgabeöffnung 23 zu vermeiden.

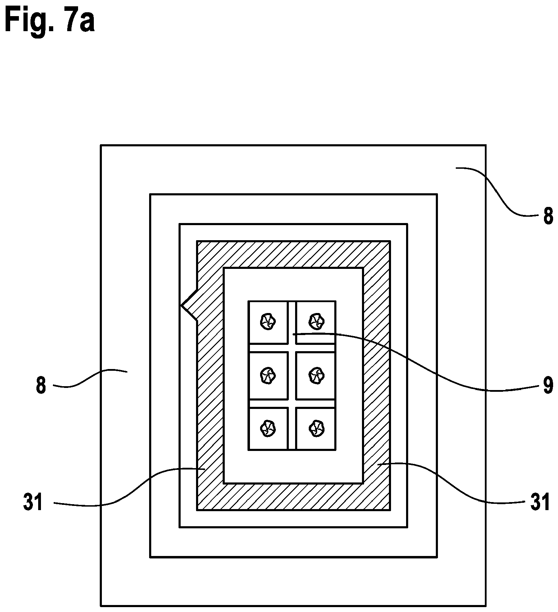

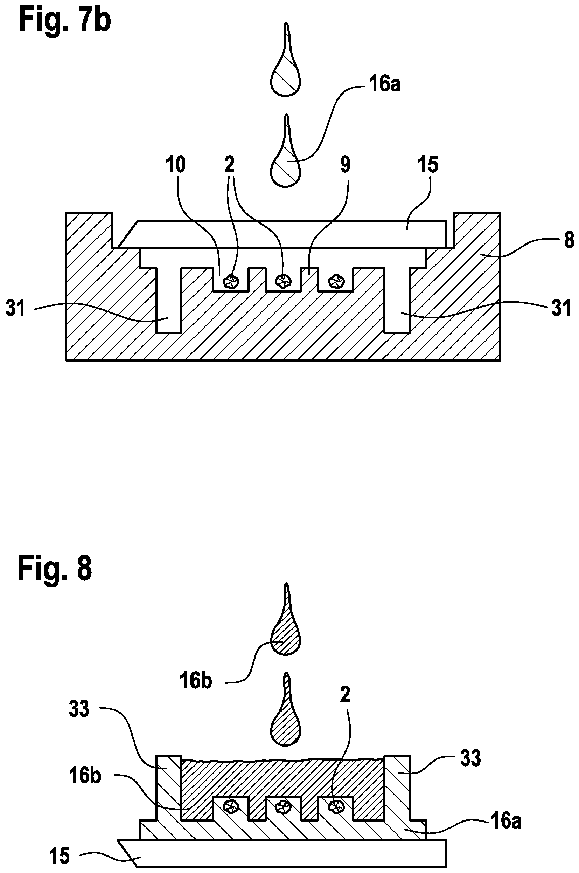

Fig. 7a, b zeigen eine spezielle Ausführungsform einer Ausgießform 8, mit der ein halbfertiger Gewebeblock mit einem integrierten Rahmen 11 erzeugt werden kann. Der Rahmen 11 ist dabei ein integraler Bestandteil des halbfertigen Gewebeblocks 4. In einem nachfolgenden Schritt wird dann der Raum innerhalb des Rahmens 11 mit einem zweiten Ausgießmaterial gefüllt, wie in Fig. 8 dargestellt ist.

Die in den Fig. 7a, b dargestellte Ausgießform 8 ist wannenförmig und hat einen Boden und Seitenwände 30. Sie kann beispielsweise aus Metall, einem Kunststoff oder aus Silikon hergestellt sein. Zwischenwände 9 unterteilen den Boden der Ausgießform 8 in mehrere Fächer 10, welche dazu vorgesehen sind, jeweils eine oder mehrere Gewebeproben 2 aufzunehmen. Die Ausgießform 8 der Fig. 7a, b ist ähnlich aufgebaut wie die in den Fig. 4a-4c dargestellte Ausgießform, so dass auf die dortige Beschreibung Bezug genommen wird.

Im Unterschied zur Ausführungsform der Fig. 4a -4c hat die Ausgießform 8 von Fig. 8 außerdem eine um die Fächer 10 außen herum verlaufende grabenartige Vertiefung 31. Der Boden der Vertiefung 31 ist dabei tiefer als der Boden der Fächer 10. Nach dem Ausgießen der Ausgießform 8 mit dem ersten Ausgießmaterial 16a entsteht dadurch ein halbfertiger Gewebeblock 4 mit darin integrierten Gewebeproben 2, der entsprechend eine um die Gewebeproben 2 herumlaufende Wand 33 bzw. einen Rahmen 11 aufweist. Der Rahmen 11 des halbfertigen Gewebeblocks 4 ist dabei höher als ein innerhalb liegender Bereich, in dem sich die Gewebeproben 2 befinden.

Nach dem Entformen des halbfertigen Gewebe-Wachsblocks 4 aus der Ausgießform 8 wird der Raum innerhalb der Wand 33 bzw. des Rahmens 11 in einem nachfolgenzweiten Schritt mit einem zweiten Ausgießmaterial 16b gefüllt, wie in Fig. 8 gezeigt ist. Dadurch entsteht ein fertiger Gewebe-Wachsblock 4, der schließlich in dünne Scheiben 21 geschnitten werden kann.

Beim nachfolgenden Schneiden des Gewebe-Wachsblocks 4 mittels eines Mikrotoms können verschiedene Fehler gemacht werden, die dazu führen können, dass eine Gewebeprobe 2 der falschen Person 1 oder einem falschen Probenentnahmeort zugeordnet wird. Ein erster Fahler kann schon dadurch gemacht werden, dass der Hilfsträger 15 in der falschen Richtung auf die Ausgießform 8 aufgesetzt wurde. In diesem Fall wären die vom Gewebe-Wachsblock 4 abgetrennten Scheiben 21 um 180 Grad verdreht.

Um ein falsches Aufsetzen des Hilfsträgers 15 auf der Ausgießform zu vermeiden, kann beispielsweise eine mechanische Codierung vorgesehen sein, die das Aufsetzen des Hilfsträgers 15 nur in einer einzigen Richtung erlaubt. Als mechanische Codierungen können beispielsweise Vorsprünge und korrespondierende Ausnehmungen an den einzelnen Teilen vorgesehen sein.

Ein weiterer Fehler kann dadurch passieren, dass eine vom Gewebe-Wachsblock 4 abgeschnittene Scheibe 21 falsch auf den Objektträger 5 aufgezogen wird.

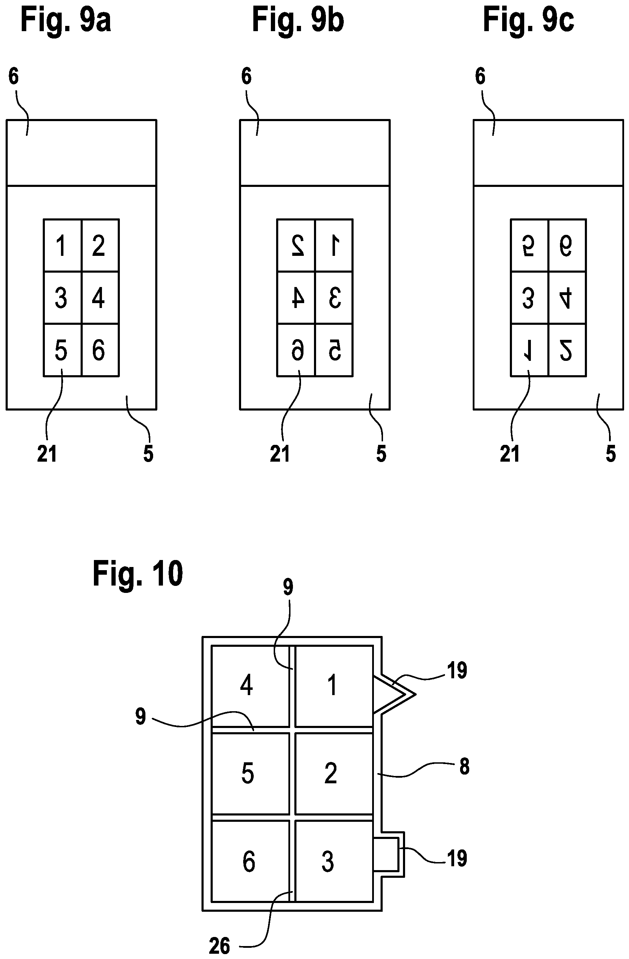

Fig. 9a zeigt eine auf einen Objektträger 5 aufgezogene Scheibe 21 ("Schnitt"), die richtig aufgezogen wurde. Die in den Fig. 9b und 9c dargestellten Scheiben 21 sind dagegen jeweils falsch auf den Objektträger 5 aufgezogen. Um eine falsche Orientierung der Scheiben 21 auf den Objektträgern 5 zu vermeiden, gibt es prinzipiell verschiedene Möglichkeiten. Eine erste Möglichkeit besteht darin, den Gewebe-Wachsblock 4 mit einem Orientierungsmarker 14 zu versehen, wie bereits beschrieben wurde. Eine andere Möglichkeit besteht darin, für jede Scheibe 21 einen Bildvergleich zwischen der Scheibe und dem zugehörigen Gewebe-Wachsblock durchzuführen.

Fig. 10 zeigt eine Draufsicht auf eine Ausgießform 8, die im Wesentlichen identisch aufgebaut ist wie die in den Figuren 4a bis 4c dargestellte Ausgießform. Im Unterschied dazu umfasst die in Fig. 10 dargestellte Ausgießform 8 allerdings eine Orientierungsmarker-Struktur 19 in Form einer Aussparung, welcher in der Seitenwand des Feldes Nr. 1 vorgesehen ist. Die Orientierungsmarker-Struktur 19 könnte aber auch an anderer Stelle, wie z.B. im Bereich des Feldes Nr. 5 vorgesehen sein. Wahlweise können auch mehrere Strukturen vorgesehen sein. Die in der Ausgießform 8 vorgesehene Orientierungsmarker-Struktur 19 erzeugt einen Orientierungsmarker 14 am Gewebe-Wachsblock 4, der nach dem Schneiden des Gewebe-Wachsblocks 4 auch an den einzelnen Scheiben 21 bzw. Schnitten erkennbar ist.

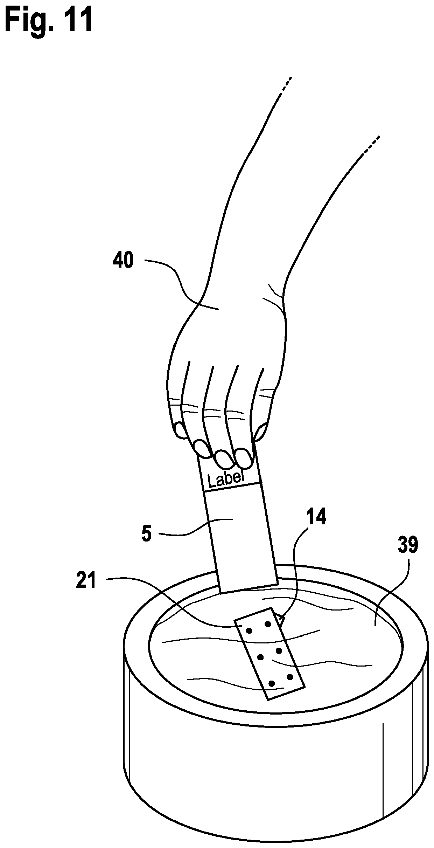

Fig. 11 zeigt eine Darstellung eines Wasserbades in dem eine Scheibe 21 eines Gewebe-Wachsblocks 4 mit einer Markierung 14 schwimmt. Die Scheibe 21 wird von Hand 40 auf einen Objektträger 5, wie z.B. ein Glasplättchen, aufgezogen, indem das Glasplättchen in das Wasserbad 39 eingetaucht und die Scheibe 21 von der Wasseroberfläche abgehoben wird. Der Orientierungsmarker 14 zeigt dem Bearbeiter dabei an, wie die richtige Orientierung der Scheibe 21 ist.

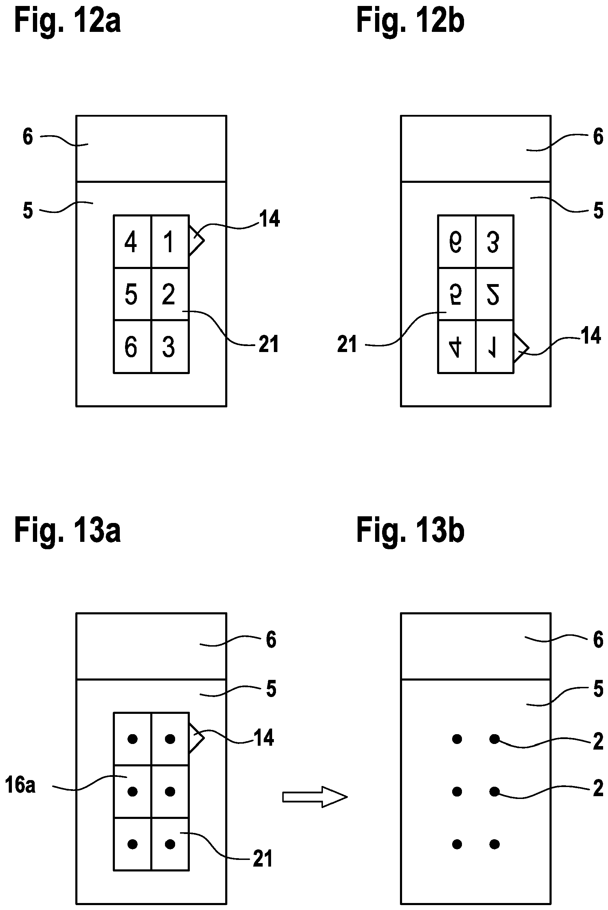

Fig. 12a zeigt eine auf dem Objektträger 5 aufgezogene Scheibe 21, die richtig aufgezogen wurde. Die in Fig. 12b dargestellte Scheibe 21 wurde dagegen falsch herum aufgezogen. Die richtige/falsche Anordnung ist anhand des Orientierungsmarkers 14 einfach zu erkennen. Im Falle der falschen Orientierung kann dies z.B. am Objektträger gekennzeichnet oder in eine Software-Applikation, eingegeben und entsprechend angezeigt werden. Eine fehlerhafte Zuordnung der einzelnen Gewebeproben 2 durch den diagnostizierenden Arzt ist dadurch nahezu ausgeschlossen.

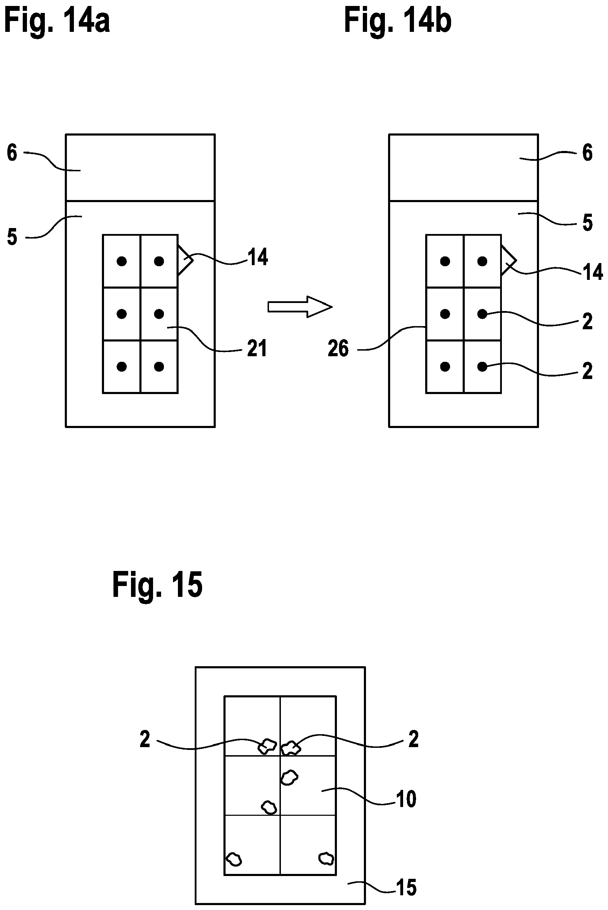

Die Figuren 13 und 14 zeigen einen weiteren Verfahrensschritt, bei dem die auf den Objektträger 5 aufgezogene Scheibe 21 entparaffiniert wird. Dieser Verfahrensschritt ist ein Teilschritt des Färbeprozesses bzw. Staining-Prozesses . Bei der Variante von Fig. 13a wird das in der Scheibe 21 enthaltene Wachs 16a gelöst, wodurch nur die einzelnen Gewebeproben 2 auf dem Objektträger 5 zurückbleiben, wie in der rechten Figur 13b dargestellt ist.

Bei der Scheibe 21 von Fig. 13a ist das Raster, in dem die einzelnen Gewebeproben 2 angeordnet sind, farblich markiert, ebenso wie der Orientierungsmarker 14. Dies kommt einfach daher, dass das zweite Ausgießmaterial 16b hier eine andere Farbe hat als das erste Ausgießmaterial 16a.

Bei der in den Figuren 14a und 14b gezeigten Variante sieht die Scheibe 21 im Wesentlichen identisch aus wie die in Fig. 13a dargestellte Scheibe 21. Im Unterschied dazu enthält das zweite Ausgießmaterial 16b allerdings einen Farbstoff, der sich mit dem Material des Objektträgers 5 verbindet und auch nach dem Schritt des Entparaffinierens auf dem Objektträger 5 verbleibt. Nacht dem Entparaffinieren sind daher auf dem Objektträger neben den Gewebeproben 2 noch farbige Linien 26 und ein farbiger Orientierungsmarker 14 auf der Oberfläche des Objektträgers 5 zu erkennen. Dadurch kann eine fehlerhafte Zuordnung der einzelnen Proben noch besser verhindert werden.

Die richtige Orientierung der auf den Objektträgern 5 aufgezogenen Scheiben 21 kann prinzipiell von einem Mitarbeiter durch einen visuellen Vergleich zwischen dem Gewebe-Wachsblock 4 und einer betreffenden Scheibe 21 überprüft werden. Alternativ kann aber auch ein automatischer Bildvergleich mittels eines Bilderkennungssystems durchgeführt werden.

Fig. 15 zeigt eine Draufsicht auf einen Gewebe-Wachsblock 4 von der Schnittseite her. Wie zu sehen ist, sind im Gewebe-Wachsblock 4 mehrere Gewebeproben 2 ungeordnet eingebettet.

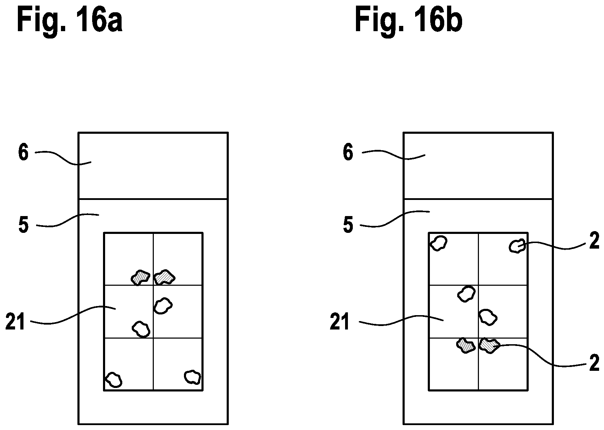

Fig. 16a zeigt eine vom Gewebe-Wachsblock abgetrennte Scheibe 21, die richtig herum auf einen Objektträger 5 aufgezogen wurde. Fig. 16b zeigt eine andere vom Gewebe-Wachsblock 4 abgetrennte Scheibe 21, die falsch herum aufgezogen wurde. Um derartige Fehler zu erkennen, wird vorzugsweise sowohl vom Gewebe-Wachsblock 4 als auch von den einzelnen, auf den Objektträgern 5 aufgezogenen Scheiben 21 ein Foto gemacht. Die einzelnen Bilder werden vorzugsweise in einer Software-Applikation angezeigt, so dass der diagnostizierende Arzt oder ein Assistent die Orientierung jeder Scheibe 21 kontrollieren kann. Die Aufzeichnung der Bilder erfolgt vorzugsweise vollautomatisch.

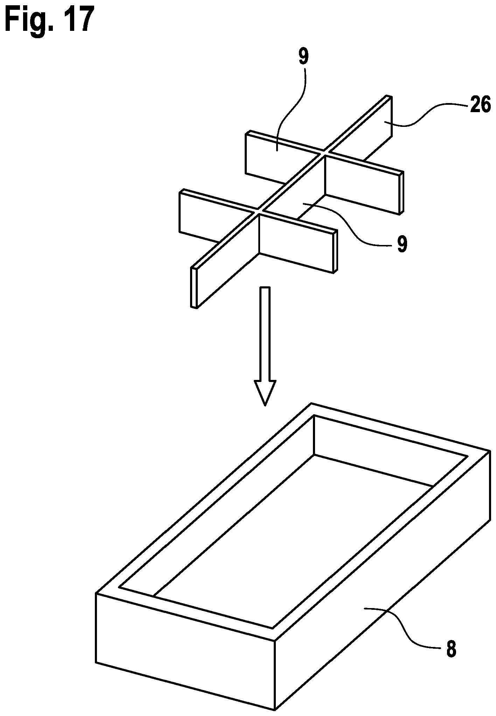

Fig. 17 zeigt eine Ausgießform 8 gemäß einer dritten Variante der Erfindung. Die Ausgießform 8 ist wannenförmig ausgebildet und hat einen Boden sowie umlaufende Seitenwände. Die Ausgießform 8 umfasst ferner eine separate Struktur 26, die in die Ausgießform 8 eingesetzt bzw. daraus entnommen werden kann. Die Struktur 26 umfasst hier mehrere Zwischenwände 9, die in Form eines Rasters angeordnet sind, welche wiederum die Fächer 10 definieren, in die später die Gewebeproben 2 eingesetzt werden. Nach dem Einlegen der Gewebeproben 2 in die Fächer 10 wird die Ausgießform 8 wiederum mit einem Ausgießmaterial 16a gefüllt. Nach dem Aushärten des Ausgießmaterials wird dann der gesamte Gewebe-Wachsblock 4 zusammen mit der Struktur aus dem wannenförmigen Teil der Ausgießform 8 entnommen.

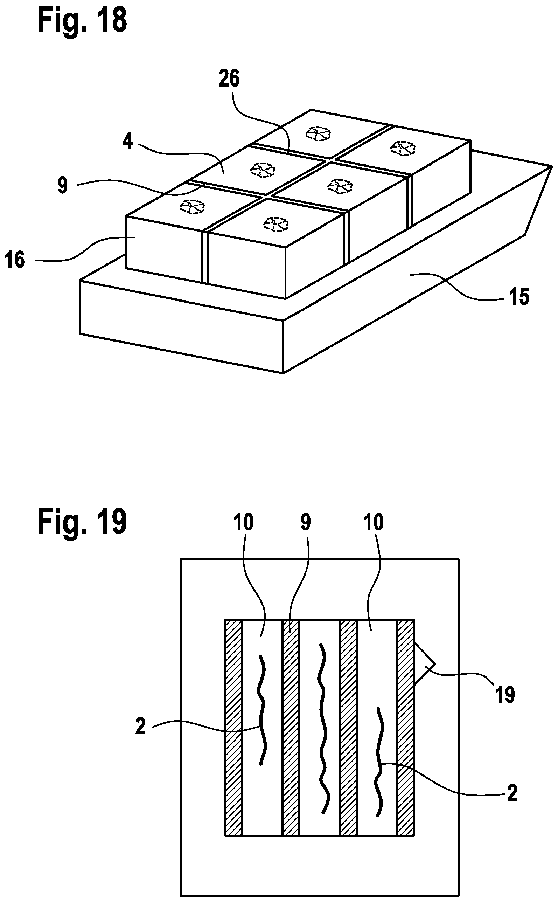

Fig. 18 zeigt eine perspektivische Ansicht eines Gewebe-Wachsblocks 4 mit mehreren darin eingebetteten Gewebeproben 2 und einen Hilfsträger 15, der nach diesem Prinzip hergestellt wurde.

Die Struktur 26 kann grundsätzlich aus dem gleichen oder einem anderen Material bestehen wie das Ausgießmaterial 16a. Gemäß einer bevorzugten Ausführungsform der Erfindung bestehen beide Materialien aus Wachs bzw. aus Paraffin. Alternativ könnte die Struktur 26 auch aus einem weichen Kunststoff und das erste Ausgießmaterial 16a aus Wachs bestehen.

Fig. 19 zeigt eine weitere Ausführungsform einer Ausgießform 8 mit einer am Boden der Ausgießform 8 befindlichen Struktur 26 mit mehreren Zwischenwänden 9. Die Zwischenwände 9 unterteilen den Boden der Ausgießform 8 in einzelne Fächer 10, in denen jeweils eine langgestreckte Gewebeprobe 2 liegt. Die Fächer 10 sind in diesem Fall wesentlich länger als breit, da sie für die Aufnahme von langgestreckten, fadenförmigen Gewebeproben 2 (z.B. Nadelbiosien) ausgelegt sind.

Die Ausgießform 8 hat an einer Seitenwand wiederum eine Orientierungsmarker-Struktur 19 in Form einer Ausnehmung. Die Bodenstruktur 26 kann wiederum als integrales Element der Ausgießform 8 oder als ein separates Element ausgebildet sein, das in die Ausgießform einsetzbar bzw. daraus herausnehmbar ist.

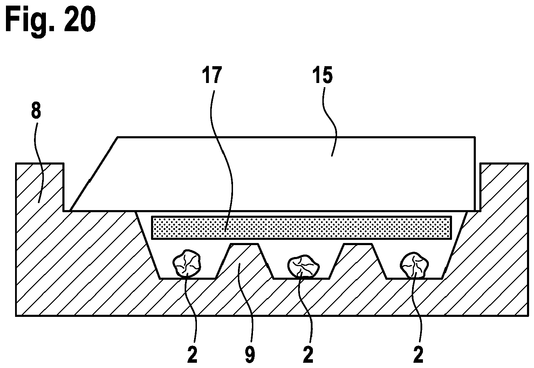

Fig. 20 zeigt eine weitere Ausführungsform einer Ausgießform 8 mit mehreren Fächern 10, in denen jeweils eine Gewebeprobe 2 angeordnet ist. Die Zwischenwände 9 sind hier allerdings nicht so hoch ausgebildet, d.h. sie reichen nicht bis an die Unterseite des Hilfsträgers 15, wenn dieser auf die Ausgießform 8 aufgesetzt ist. Im Unterschied zu den früheren Ausführungsformen liegt bei dieser Ausführungsform ein Schwamm 17 auf den Gewebeproben, der verhindert, dass die einzelnen Gewebeproben 2 aus ihrem Fach 10 in ein anderes Fach 10 wandern. Außerdem werden die Gewebeproben 2 durch den Schwamm 17 auf den Boden der Ausgießform 8 gedrückt, so dass sie alle im Wesentlichen in einer Ebene liegen.

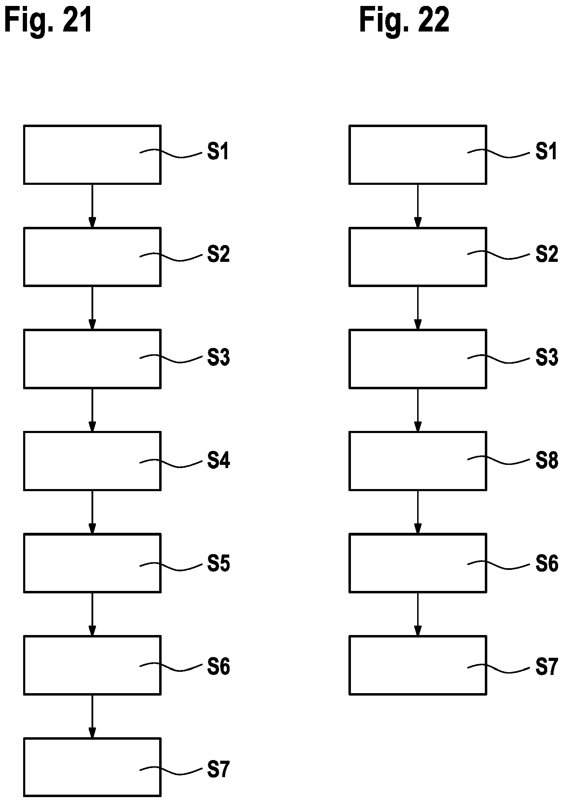

Die Figuren 21 und 22 zeigen die wesentlichen Verfahrensschritte zweier unterschiedlicher Verfahren zum Herstellen eines mehrere Gewebeproben 2 enthaltenden Gewebeblocks 4. Fig. 21 zeigt dabei ein Verfahren, bei dem wenigstens zwei Ausgießschritte gemäß Variante ein oder zwei der Erfindung durchgeführt werden. Bei dem Verfahren von Fig. 22 handelt es sich dagegen um ein einstufiges Ausgießverfahren gemäß Variante drei der Erfindung.

In Bezug auf das Verfahren von Fig. 21 werden zunächst in einem Schritt S1 mehrere Gewebeproben 2 in die Fächer 10 einer Ausgießform 8 gelegt. In Schritt S2 wird dann ein Hilfsträger 15 auf die Ausgießform 8 aufgesetzt. Die Ausgießform 8 wird dann in Schritt S3 mit einem ersten Ausgießmaterial 16a übergossen, wodurch zunächst ein halbfertiger Gewebe-Wachsblock 4 erzeugt wird. Nach dem Erkalten des ersten Ausgießmaterials 16a wird die gesamte Anordnung aus Gewebe-Wachsblock 4 und Hilfsträger 15 aus der Ausgießform 8 entnommen (Schritt S4). Schritt S5 beschreibt schematisch den zweiten Ausgießprozess, wobei der halbfertige Gewebe-Wachsblock 4 mit einem zweiten Ausgießmaterial übergossen wird, so dass die im halbfertigen Gewebe-Wachsblock 4 enthaltenen Freiräume 20 gefüllt werden. Der fertige Gewebe-Wachsblock 4 kann nun im Schritt S6 mittels eines Mikrotoms geschnitten werden. Die einzelnen vom Gewebe-Wachsblock 4 abgetrennten Scheiben 21 werden schließlich in Schritt S7 auf Objektträger 5 aufgezogen.

Fig. 22 beschreibt die wesentlichen Verfahrensschritte eines Verfahrens zum Herstellen eines mehrere Gewebeproben 2 enthaltenden Gewebe-Wachsblocks 4 in einem einstufigen Ausgießprozess. Die dabei verwendete Ausgießform 8 hat eine herausnehmbare Bodenstruktur 26, insbesondere aus Wachs, gemäß der dritten Variante der Erfindung.

Im ersten Schritt S1 werden wiederum mehrere Gewebeproben 2 in die Fächer 10 einer Ausgießform 8 eingelegt. In Schritt S2 wird wiederum ein Hilfsträger 15 auf die Ausgießform 8 aufgesetzt und die Ausgießform 8 dann in Schritt S3 mit einem Ausgießmaterial 16a, insbesondere Wachs, ausgegossen. In Schritt S8 wird der gesamte Gewebe-Wachsblock 4 einschließlich der darin eingebetteten Struktur 26 aus der Ausgießform 8 entnommen. Der Gewebe-Wachsblock 4 ist damit bereits fertig und kann in Schritt S6 wiederum in dünne Scheiben 21 geschnitten werden. Diese werden schließlich in Schritt S7 auf Objektträger 5 aufgezogen.

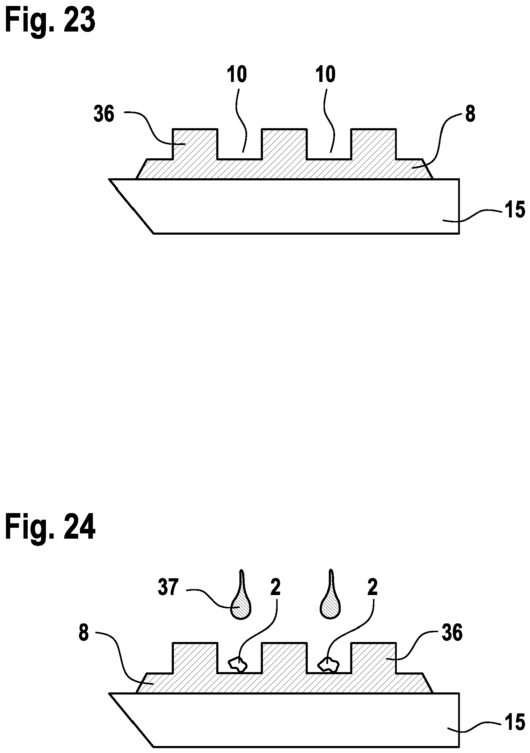

Die Fig. 23-26 veranschaulichen eine vierte Variante der Erfindung, bei der die Ausgießform 8 selbst aus Wachs besteht und mittels eines Mikrotoms schneidbar ist. Die Ausgießform 8 bildet bei dieser Variante einen Teil des späteren Gewebeblocks 4, der in Scheiben 21 geschnitten wird.

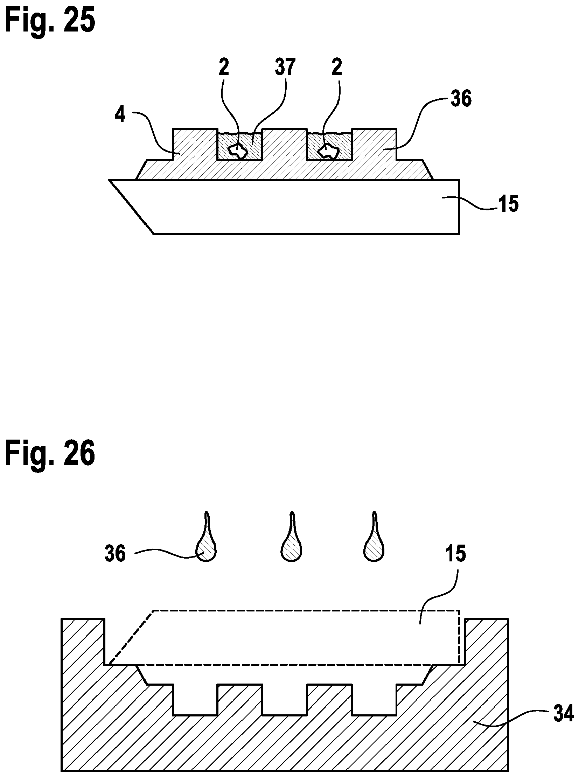

Wie in Fig. 23 dargestellt ist, umfasst die Ausgießform 8 mehrere Fächer 10, die dazu ausgelegt sind, eine oder mehrere Gewebeproben 2 darin aufzunehmen. Nach dem Einlegen der Gewebeproben 2 in die Fächer 10 werden diese mit einem Ausgießmaterial 37, insbesondere Wachs, gefüllt (siehe Fig. 24). Der fertige Gewebe-Wachsblock 4 ist in Fig. 25 dargestellt. Wie vorstehend erwähnt, besteht die Ausgießform 8 vorzugsweise aus Wachs; sie kann aber auch aus einem anderen geeigneten Material mit vergleichbarer Härte, wie z. B. einem weichen Kunststoff, bestehen, das nach der Herstellung des Gewebeblocks 4 verschleißarm mittels eines Mikrotoms geschnitten werden kann.

Die Fig. 23-25 zeigen ferner, dass die Ausgießform 8 mit einem Hilfsträger 15 verbunden ist, der an einer Bodenfläche der Ausgießform 8 angeordnet ist und im Wesentlichen dazu dient, in eine Schneidvorrichtung (Mikrotom) eingespannt zu werden. Nach der Herstellung des Gewebe-Wachsblocks 4 kann dieser unmittelbar in ein Mikrotom eingespannt und in dünne Scheiben 21 geschnitten werden.

Die Ausgießform 8 kann z. B. mit Hilfe einer Negativform 34, wie sie in Fig. 26 gezeigt ist, hergestellt werden, indem die Negativform 34 mit einem Ausgießmaterial 36, insbesondere Wachs, gefüllt wird. Nach dem Erkalten und Entformen bildet das Wachs die eigentliche Ausgießform 8, wie sie z. B. in Fig. 23 dargestellt ist. Wie zu erkennen ist, sind die Fächer 10 aufgrund der speziellen Bodenstruktur der Negativform 34 in der Ausgießform 8 bereits vorhanden. Alternativ könnte auch ein Wachskörper ohne Fächer 10 hergestellt werden, aus dem dann die Fächer 10 herausgearbeitet werden, um schließlich eine Ausgießform 8 aus Wachs zu erhalten.

Um den Hilfsträger 15 und die Ausgießform 8 zu verbinden, wird der Hilfsträger 15 bei der Herstellung der Ausgießform 8 vorzugsweise auf die Negativform gesetzt und die Negativform 34 dann mit dem Ausgießmaterial 36, insbesondere Wachs, gefüllt, so dass sich der Hilfsträger 15 nach dem Erstarren des Ausgießmaterials 36 mit der Ausgießform 8 verbindet.

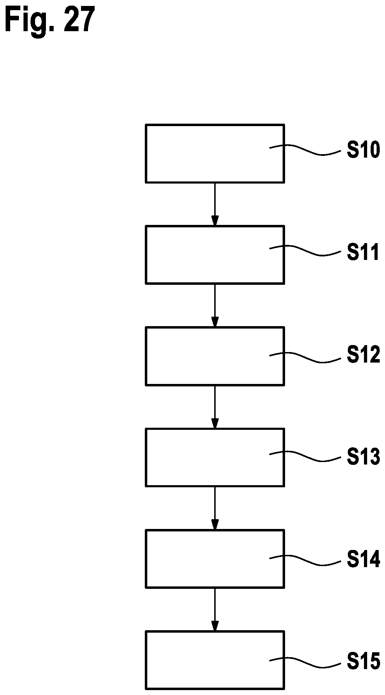

Fig. 27 zeigt verschiedene Verfahrensschritte S10-S15 eines Verfahrens zur Herstellung eines Gewebe-Wachsblocks 4, wie er beispielhaft in Fig. 25 dargestellt ist. Dabei wird in den Schritten S10- S12 zunächst eine Ausgießform 8 hergestellt. Hierzu wird in Schritt S10 zunächst eine Form, wie z. B. eine Metallform, bereitgestellt, die als Negativform dient. In die Form 34 wird dann in Schritt S11 ein Hilfsträger 15 eingesetzt. Danach wird in Schritt S12 ein Material 36, insbesondere Wachs, durch die im Hilfsträger 15 vorhandenen Öffnungen in die Negativform gegossen.

Das Ergebnis dieser Prozedur ist eine Ausgießform 8 aus Wachs mit mehreren Fächern 10, die dazu ausgelegt sind, eine oder mehrere Gewebeproben 2 darin aufzunehmen, wobei der Hilfsträger 15 an der Unterseite der Ausgießform 8 angeordnet ist. In Schritt S13 wird dann jeweils wenigstens eine Gewebeprobe 2 in die einzelnen Fächer 10 eingelegt und die Fächer 10 in Schritt S14 mit einem Ausgießmaterial 37 gefüllt. Der fertige Gewebeblock 4 kann nun nochmals erwärmt werden, um die Materialien besser zu verbinden, oder er kann in Schritt S15 gleich in ein Mikrotom eingespannt und in dünne Scheiben 21 geschnitten werden.

Die vorstehend, in Zusammenhang mit der ersten oder zweiten Variante der vorliegenden Erfindung beschrieben Ausführungsformen oder Maßnahmen sind in gleichem Maße auch bei der zuletzt beschriebenen vierten Variante realisierbar. So kann z. B. der Gewebeblock 4 gemäß der vierten Variante auch mit einem Orientierungsmarker 14 versehen sein, einen umlaufenden, integrierten Rahmen 33 haben oder Materialien unterschiedlicher Farbe aufweisen. Ebenso könnte der fertige Gewebeblock 4 vor dem Schneiden erhitzt werden, um die Materialverbindung zwischen den Materialien 36 und 37 zu verbessern, etc...

## Patentansprüche

1. Verfahren zum Herstellen eines mehrere Gewebeproben (2) enthaltenden Gewebeblocks (4), insbesondere eines Gewebe-Wachsblocks, mit folgenden Schritten:
- Bereitstellen einer Ausgießform (8) mit mehreren Fächern (10), die durch eine oder mehrere Zwischenwände (9) voneinander abgegrenzt sind;
- Einlegen jeweils einer Gewebeprobe (2) in die einzelnen Fächer (10);
- Anordnen eines Hilfsträgers (15) auf der Ausgießform (8);
- Füllen der Ausgießform (8) mit einem ersten Ausgießmaterial (16a);
- Entformen des Gewebeblocks (4) aus der Ausgießform (8), wobei der Gewebeblock (4) einen oder mehrere Freiräume (20) aufweist, der bzw. die durch die wenigstens eine Zwischenwand (9) als Abdruck derselben entstanden ist bzw. sind; und
- Füllen des wenigstens einen Freiraums (20) mit einem zweiten Ausgießmaterial (16b).

2. Verfahren nach Anspruch 1, **dadurch gekennzeichnet, dass** nach dem Entformen des Gewebeblocks (4) aus der Ausgießform (8) ein Rahmen (11) auf den Gewebeblock (4) aufgesetzt wird, und das zweite Ausgießmaterial (16b) dann in den Rahmen (11) gefüllt wird, um den bzw. die im Gewebeblock (4) vorhandenen Freiräume (20) zu füllen.

3. Verfahren nach Anspruch 1, **dadurch gekennzeichnet, dass** der Gewebeblock (4) nach dem Entformen aus der Ausgießform (8) in eine Ausgabeöffnung (23) eines Ausgießmaterial-Spenders (22) eingesetzt wird und das zweite Ausgießmaterial (16b) dann vom Ausgießmaterial-Spender (22) ausgegeben wird, um den bzw. die im Gewebeblock (4) vorhandenen Freiräume (20) zu füllen.

4. Verfahren nach Anspruch 1, **dadurch gekennzeichnet, dass** der Gewebeblock (4) vor und/oder nach dem Füllen des bzw. der Freiräume (20) mit dem zweiten Ausgießmaterial (16b) auf eine vorgegebene Temperatur erwärmt wird, um die Verbindung zwischen dem ersten und zweiten Ausgießmaterial (16a, 16b) zu verbessern.

5. Verfahren nach Anspruch 1, **dadurch gekennzeichnet, dass** das zweite Ausgießmaterial (16b) eine andere Farbe hat als das erste Ausgießmaterial (16a).

6. Verfahren nach Anspruch 1, **dadurch gekennzeichnet, dass** eine Ausgießform (8) verwendet wird, die eine um die Fächer (10) außen herum verlaufende Vertiefung (31) aufweist, welche nach dem Ausgießen mit dem ersten Ausgießmaterial (16a) eine um die Gewebeproben (2) herumlaufende Wand (33) am halbfertigen Gewebeblock (4) entstehen lässt, und dass der halbfertige Gewebeblock (4) dann mit einem zweiten Ausgießmaterial (16b) ausgegossen wird, so dass der wenigstens eine Freiraum (20) mit dem zweiten Ausgießmaterial (16b) gefüllt wird.

7. Verfahren nach Anspruch 1, **dadurch gekennzeichnet, dass**:
- der Gewebeblock (4) nach seiner Herstellung in dünne Scheiben (21) geschnitten;
- die Scheiben (21) auf Objektträgern (5) angeordnet;
- wenigstens ein Bild des Gewebeblocks (4) und wenigstens ein Bild einer der Scheiben (21) aufgezeichnet; und
- ein Bildervergleich zwischen einem Bild des Gewebeblocks (4) und einem Bild einer der Scheiben (21) durchgeführt wird, um die Orientierung der Scheibe (21) auf dem Objektträger (5) zu bestimmen.

8. Gewebeblock mit mehreren darin eingebetteten Gewebeproben (2), **dadurch gekennzeichnet, dass** der Gewebeblock (4) umfasst:
- ein erstes Ausgießmaterial (16a), in dem die Gewebeproben (2) eingebettet sind; und
- ein zweites Ausgießmaterial (16b), das auf dem ersten Ausgießmaterial (16a) angeordnet ist;
- wobei eine dem zweiten Ausgießmaterial (16b) zugewandte Oberfläche des ersten Ausgießmaterials (16a) eine oder mehrere Vertiefungen aufweist, die vom zweiten Ausgießmaterial (16b) wenigstens teilweise gefüllt sind.

9. Gewebeblock mit mehreren darin eingebetteten Gewebeproben (2), **dadurch gekennzeichnet, dass** der Gewebeblock (4) umfasst:
- ein erstes Ausgießmaterial (16a), in dem die Gewebeproben (2) eingebettet sind;
- wobei der Gewebeblock (4) ferner eine um die Gewebeproben (2) außen herum verlaufende Wand (31) aufweist, die aus dem ersten Ausgießmaterial (16a) besteht; und
- ein zweites Ausgießmaterial (16b), das in einen Raum innerhalb der Wand (31) auf dem ersten Ausgießmaterial (16a) aufgebracht ist.

10. Gewebeblock nach Anspruch 8 oder 9, **dadurch gekennzeichnet, dass** das zweite Ausgießmaterial (16b) die Eigenschaft besitzt, sich mit dem Material eines Objektträgers (5), auf dem eine Scheibe (21) des Gewebeblocks (4) nach dem Schneiden angeordnet wird, zu verbinden, so dass das zweite Ausgießmaterial (16b) auch nach einem Prozessschritt, bei dem das erste Ausgießmaterial (16a) vom Objektträger (5) entfernt wird, auf dem Objektträger (5) verbleibt und dort sichtbar ist.

11. Gewebeblock nach Anspruch 8 oder 9, **dadurch gekennzeichnet, dass** der Gewebeblock (4) einen Orientierungsmarker (14) aufweist.

12. Gewebeblock nach Anspruch 8 oder 9, **dadurch gekennzeichnet, dass** der Gewebeblock (4) eine um die Gewebeproben (2) herumlaufende Wand (33) aufweist, die aus dem ersten Ausgießmaterial (16a) besteht.

13. Anordnung zum Herstellen eines mehrere Gewebeproben (2) enthaltenden Gewebeblocks (4), insbesondere eines Gewebe-Wachsblocks, umfassend:
- eine Ausgießform (8) mit mehreren darin angeordneten Fächern (10), die durch eine oder mehrere Zwischenwände (9) voneinander abgegrenzt sind; wobei
- die Ausgießform (8) im Bereich wenigstens eines der Fächer (10) eine Orientierungsmarker-Struktur (19) aufweist, die am Gewebeblock (4) einen entsprechenden Orientierungsmarker (14) entstehen lässt, wenn die Ausgießform (8) mit dem ersten Ausgießmaterial (16a) gefüllt wird.

14. Anordnung nach Anspruch 13, **dadurch gekennzeichnet, dass** ferner ein Hilfsträger (15) zum Halten des Gewebeblocks (4) vorgesehen ist, wobei die Ausgießform (8) und der Hilfsträger (15) geometrisch so aufeinander angepasst sind, dass der Hilfsträger (15) an seinem seitlichen Randbereich an der Ausgießform (8) anliegt.

15. Anordnung zum Herstellen eines mehrere Gewebeproben (2) enthaltenden Gewebeblocks (4), insbesondere eines Gewebe-Wachsblocks, umfassend:
- eine Ausgießform (8) mit mehreren darin angeordneten Fächern (10), die durch eine oder mehrere Zwischenwände (9) voneinander abgegrenzt sind; wobei
- die Ausgießform (8) ferner eine um die Fächer (10) herumlaufende Vertiefung (31) aufweist, welche nach dem Ausgießen mit dem ersten Ausgießmaterial (16a) eine um die Gewebeproben (2) herumlaufende Wand (33) entstehen lässt.
